# EUROPEAN PATENT APPLICATION

(11) **EP 4 800 838 A1**
(43) Date of publication of application: **02.09.2026**
(21) Application number: 24898009.6
(22) Date of filing: 21.11.2024
(51) Int. Cl.: H01Q 1/24, H01Q 5/328, H01Q 1/48, H01Q 13/10, H04M 1/02

(54) **ELECTRONIC DEVICE COMPRISING ANTENNA**

(30) Priority: 01.12.2023 KR 20230172444; 25.01.2024 KR 20240011524
(71) Applicant: Samsung Electronics Co., Ltd., Suwon-si, Gyeonggi-do 16677 (KR)
(72) Inventor: SON, Cheolhong, Suwon-si Gyeonggi-do 16677 (KR); KIM, Seunghwan, Suwon-si Gyeonggi-do 16677 (KR); KIM, Jaehyung, Suwon-si Gyeonggi-do 16677 (KR); HWANG, Soonho, Suwon-si Gyeonggi-do 16677 (KR); NAM, Hojung, Suwon-si Gyeonggi-do 16677 (KR); PARK, Sungkoo, Suwon-si Gyeonggi-do 16677 (KR); SEOL, Kyungmoon, Suwon-si Gyeonggi-do 16677 (KR); LEE, Kookjoo, Suwon-si Gyeonggi-do 16677 (KR); LEE, Minkyung, Suwon-si Gyeonggi-do 16677 (KR); JANG, Kyihyun, Suwon-si Gyeonggi-do 16677 (KR)
(74) Representative: HGF
(86) International application number: PCT/KR2024/018476
(87) International publication number: WO 2025/116413

(57) **Abstract**

This electronic device may comprise: a first housing part including a plurality of first side areas; a second housing part including a third surface and a plurality of second side areas; and a hinge unit for connecting the first housing part and the second housing part, wherein the plurality of first side areas can include a first segment part and an antenna element extending from the first segment part, the plurality of second side areas can include a first ground part and a slot extending from the first ground part, and, in a folded state, the slot is disposed to substantially face the antenna element such that a current having the same phase can flow through the slot and the antenna element. Other various embodiments are possible.

## Description

### TECHNICAL FIELD

Various embodiments disclosed herein relate to an electronic device including an antenna.

### BACKGROUND ART

With the advancement of wireless communication technologies, electronic devices utilizing wireless communication, including at least one antenna, are commonly used. Since communication systems for portable wireless communication devices are commercialized, the wireless communication technologies for electronic devices have been utilized and developed in various fields.

The above information is presented as related art only to assist with an understanding of the disclosure. No determination has been made, and no assertion is made, as to whether any of the above might be applicable as prior art with regard to the disclosure.

### DISCLOSURE OF THE INVENTION

### TECHNICAL SOLUTIONS

An electronic device according to an example embodiment may include a first housing portion including a first surface, a second surface opposite to the first surface, and a plurality of first side surface areas connecting the first surface to the second surface, a second housing portion including a third surface, a fourth surface opposite to the third surface, and a plurality of second side surface areas connecting the third surface to the fourth surface, and a hinge connecting the first housing portion and the second housing portion, and configured to operate between a folded state in which the first surface and the third surface face each other and an unfolded state in which the first surface and the third surface do not face each other. In an example embodiment, the plurality of first side surface areas may include a first split unit and an antenna element in a shape extending from the first split unit. In an example embodiment, the plurality of second side surface areas may include a first ground unit and a slot in a shape extending from the first ground unit. In an example embodiment, the slot may be disposed to substantially face the antenna element in the folded state, wherein currents of a same phase flow in the slot and the antenna element.

Alternatively, an electronic device according to an example embodiment may include: a first housing portion including a plurality of first side surface areas, and a second housing portion including a plurality of second side surface areas and movable relative to the first housing portion. In an example embodiment, the plurality of first side surface areas may include a first split unit, a second split unit, and an antenna element provided between the first split unit and the second split unit. In an example embodiment, the plurality of second side surface areas may include a first ground unit, a second ground unit, and a slot provided between the first split unit and the second split unit. In an example embodiment, the slot may be disposed to substantially face the antenna element in a state in which the first housing portion and the second housing portion face each other, wherein currents of a same phase flow in the slot and the antenna element.

### BRIEF DESCRIPTION OF THE DRAWINGS

The foregoing and other aspects, features, and advantages of embodiments of the present disclosure will become more apparent from the following detailed description with reference to the accompanying drawings.
FIG. 1 is a block diagram of an electronic device in a network environment according to various embodiments.
FIG. 2A is a diagram illustrating an unfolded state of an electronic device according to an embodiment.
FIG. 2B is a diagram illustrating a folded state of an electronic device according to an embodiment.
FIG. 3A is a diagram illustrating an unfolded state of an electronic device according to an embodiment.
FIG. 3B is a diagram illustrating a folded state of an electronic device according to an embodiment.
FIG. 3C is a diagram schematically illustrating a cross-section of an electronic device according to an embodiment.
FIG. 4A is a plan view of a first housing portion of an electronic device according to an embodiment.
FIG. 4B is a plan view of a second housing portion of an electronic device according to an embodiment.
FIG. 4C is a graph of radiation efficiency depending on a frequency band of a plurality of embodiments.
FIG. 4D is a plan view of a second housing portion of an electronic device according to an embodiment.
FIG. 4E is a plan view of a second housing portion of an electronic device according to an embodiment.
FIG. 4F is a plan view of a second housing portion of an electronic device according to an embodiment.
FIG. 5A is a plan view of a first housing portion of an electronic device according to an embodiment.
FIG. 5B is a plan view of a second housing portion of an electronic device according to an embodiment.
FIG. 5C is a graph of radiation efficiency depending on a frequency band of a plurality of embodiments.
FIG. 5D is a plan view of a second housing portion of an electronic device according to an embodiment.
FIG. 5E is a plan view of a second housing portion of an electronic device according to an embodiment.
FIG. 5F is a plan view of a second housing portion of an electronic device according to an embodiment.
FIG. 6A is a plan view of a first housing portion of an electronic device according to an embodiment.
FIG. 6B is a plan view of a second housing portion of an electronic device according to an embodiment.
FIG. 6C is a graph of radiation efficiency depending on a frequency band of a plurality of embodiments.
FIG. 6D is a plan view of a second housing portion of an electronic device according to an embodiment.
FIG. 6E is a plan view of a second housing portion of an electronic device according to an embodiment.
FIG. 6F is a plan view of a second housing portion of an electronic device according to an embodiment.
FIG. 7A is a graph of radiation efficiency depending on a frequency band of a plurality of embodiments.
FIG. 7B is a graph of radiation efficiency depending on a frequency band of a plurality of embodiments.
FIG. 7C is a plan view of a state in which a first housing portion and a second housing portion of an electronic device are arranged separately according to an embodiment.
FIG. 8A is a graph of radiation efficiency depending on a frequency band of a plurality of embodiments.
FIG. 8B is a graph of radiation efficiency depending on a frequency band of a plurality of embodiments.
FIG. 8C is a plan view of a state in which a first housing portion and a second housing portion of an electronic device are arranged separately according to an embodiment.
FIG. 9 is a plan view of a state in which a first housing portion and a second housing portion of an electronic device are arranged separately according to an embodiment.
FIG. 10 is a plan view of a state in which a first housing portion and a second housing portion of an electronic device are arranged separately according to an embodiment.
FIG. 11 is a plan view of a state in which a first housing portion and a second housing portion of an electronic device are arranged separately according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements, and a repeated description related thereto may not be provided.

It should be appreciated that various embodiments of the disclosure and the terms used therein are not intended to limit the technical features set forth herein to particular embodiments and include various changes, equivalents, or replacements for a corresponding embodiment. With regard to the description of the drawings, similar reference numerals may be used to refer to similar or related elements. The singular form of a noun corresponding to an item may include one or more of the items, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, in an embodiment, the module may be implemented in a form of an application-specific integrated circuit (ASIC).

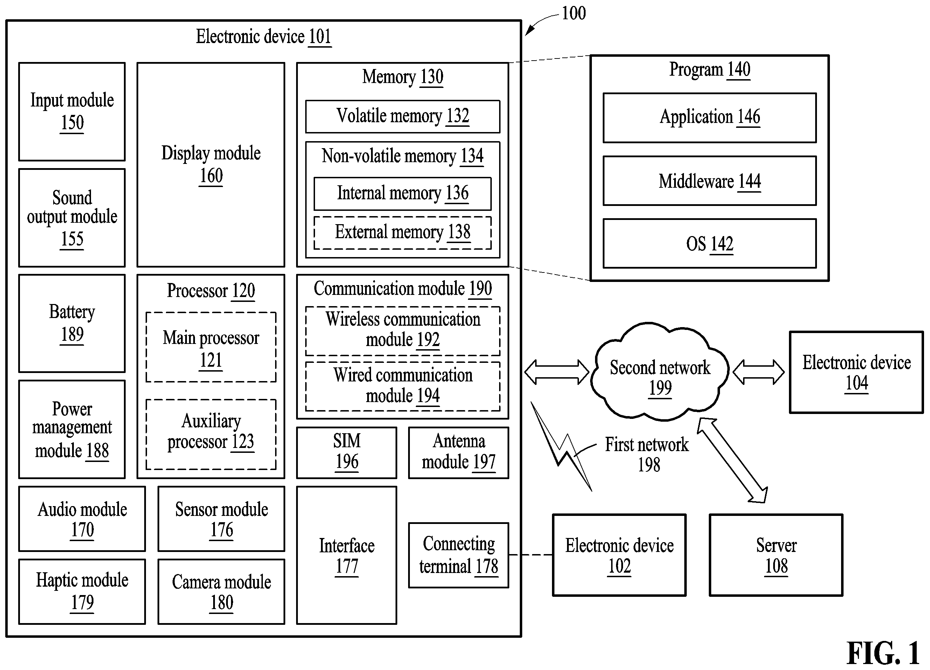

Various embodiments may be implemented as software (e.g., a program) including one or more instructions that are stored in a storage medium (e.g., internal memory 136 or external memory 138 of FIG. 1) that is readable by a machine (e.g., an electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore ^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network).

According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197.

In an embodiment, at least one of the components (e.g., the connecting terminal 178) may be omitted from the electronic device 101, or one or more other components may be added to the electronic device 101.

In an embodiment, some of the components (e.g., the sensor module 176, the camera module 180, or the antenna module 197) may be integrated into a single component (e.g., the display module 160). The processor 120 may execute, for example, software (e.g., a program 140) to control at least one other component (e.g., a hardware or software component) of the electronic device 101 connected to the processor 120 and may perform various data processing or computation.

According to an embodiment, as at least part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121.

For example, when the electronic device 101 includes the main processor 121 and the auxiliary processor 123, the auxiliary processor 123 may be adapted to consume less power than the main processor 121, or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123.

According to an embodiment, the auxiliary processor 123 (e.g., the NPU) may include a hardware structure specified for artificial intelligence (AI) model processing. An artificial intelligence model may be generated through machine learning. Such learning may be performed, e.g., by the electronic device 101 where the AI model is executed or via a separate server (e.g., the server 108). Learning algorithms may include, but are not limited to, e.g., supervised learning, unsupervised learning, semisupervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. In an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., the electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and lowlatency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the components described above may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultralow-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

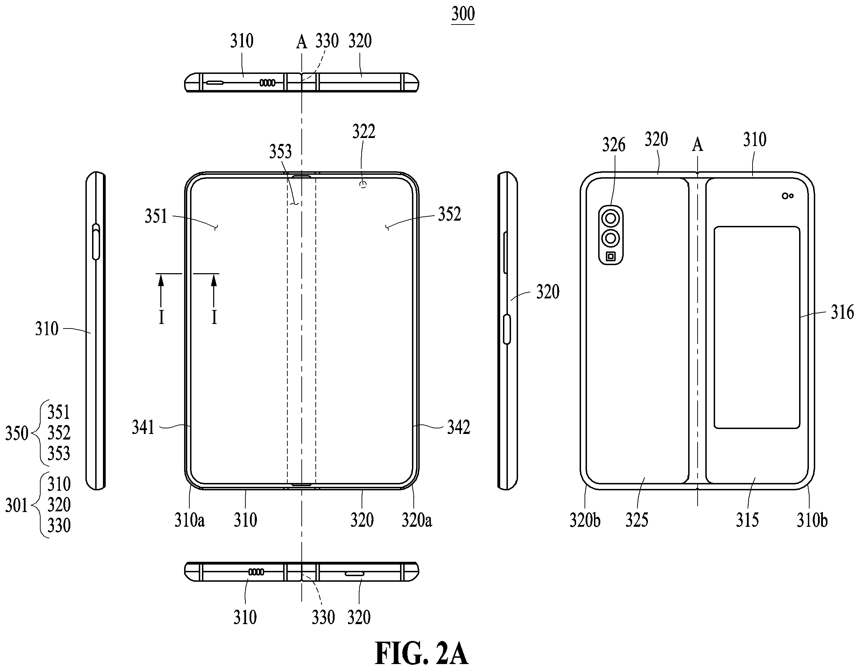

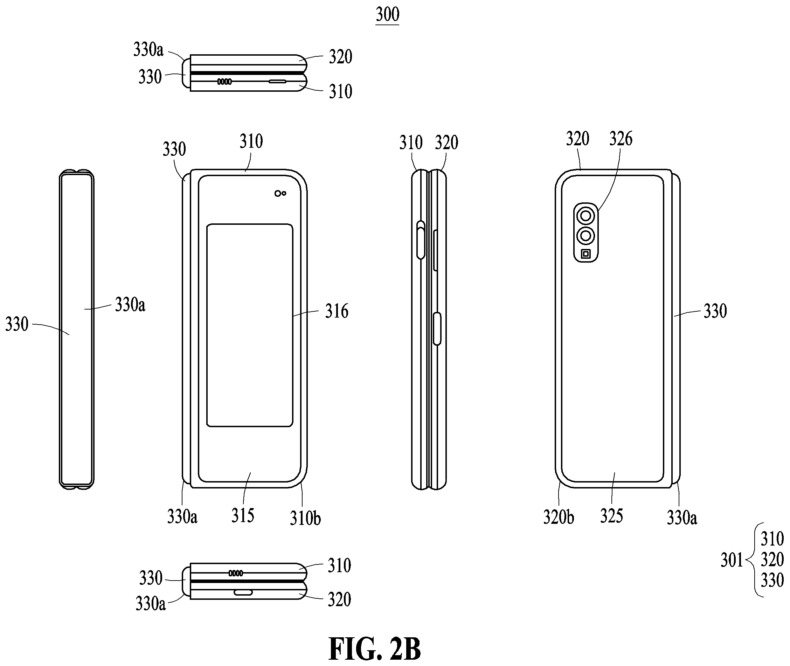

FIG. 2A is a diagram illustrating an folded state of an electronic device according to an embodiment, and FIG. 2B is a diagram illustrating an unfolded state of an electronic device according to an embodiment.

Referring to FIGS. 2A and 2B, an electronic device 300 (e.g., the electronic device 101 of FIG. 1) according to an embodiment may include a housing 301 that form an exterior and accommodate components inside.

Hereinafter, the description provided above is not repeated, and it is apparent that some components and structures of the electronic device 300 may be replaced, added, or omitted within a scope easily understandable by one of ordinary skill in the art with reference to the following drawings and descriptions. In addition, at least one component or feature of the embodiments described above may be coupled to the electronic device 300 unless this is technically and clearly infeasible.

The electronic device 300 of FIGS. 2A and 2B may be an embodiment of the electronic device 101 of FIG. 1. The electronic device 300 may be a foldable or bendable electronic device.

In an embodiment, the electronic device 300 may include the housing 301 and/or a display module 350 (e.g., the display module 160 of FIG. 1). The housing 301 may form an exterior of the electronic device 300. The display module 350 may include a flexible or foldable display panel disposed within a space formed by the housing 301.

A surface on which the display module 350 is disposed (or a surface from which the display module 350 is viewed from outside the electronic device 300) may be defined as a front surface of the electronic device 300. In addition, a surface opposite to the front surface may be defined as a rear surface of the electronic device 300. In addition, a surface surrounding a space between the front surface and the rear surface may be defined as a side surface of the electronic device 300.

In an embodiment, the housing 301 may include a first housing portion 310, a second housing portion 320, and/or a hinge unit 330. For example, the hinge unit 330 may include a hinge cover 330a that covers a foldable portion of the housing 301. The housing 301 of the electronic device 300 is not limited to the shape and combination illustrated in FIGS. 2A and 2B and may be implemented in a different shape or a different combination of components.

In an embodiment, the first housing portion 310 may be connected to the hinge unit 330, and may include a first surface 310a facing a first direction, and a second surface 310b facing a second direction opposite to the first direction. The second housing portion 320 may be connected to the hinge unit 330, and may include a third surface 320a facing a third direction, and a fourth surface 310b facing a fourth direction opposite to the third direction. The second housing portion 320 may rotate with respect to the first housing portion 310 about the hinge unit 330. A state of the electronic device 300 may be changed to a folded state or an unfolded state.

In an embodiment, the first surface 310a may face the third surface 320a in a fully folded state of the electronic device 300, and the third direction may be substantially identical to the first direction in a fully unfolded state of the electronic device 300.

In an embodiment, the first housing portion 310 and the second housing portion 320 may be foldably connected to each other. The first housing portion 310 and the second housing portion 320 may be disposed on both sides with respect to a folding axis A and may be generally symmetrical with respect to the folding axis A. As will be described hereinafter, an angle or distance between the first housing portion 310 and the second housing portion 320 may vary depending on whether the electronic device 300 is in the unfolded state, the folded state, or an intermediate state that is a partially unfolded state (or a partially folded state).

According to an embodiment, the second housing portion 320 may include a sensor area 322 in which various sensors are disposed. For example, the various sensors may be positioned on a rear surface of the display module 350 in the sensor area 322. According to an embodiment, the first housing portion 310 may include a sensor area (not shown) in which at least one sensor is disposed.

In an embodiment, the first housing portion 310 and the second housing portion 320 may form a recess that accommodates the display module 350. In an embodiment, components embedded in the electronic device 300 to perform various functions may be exposed to the front surface of the electronic device 300 through the sensor area 322 or through one or more openings provided in the sensor area 322. In an embodiment, the components may include various types of sensors. The sensors may include, for example, at least one of a front camera or a proximity sensor. According to an embodiment, the sensor area 322 may not be included in the second housing portion 320 or may be formed at a position different from that shown in the drawings.

In an embodiment, at least a portion of the first housing portion 310 and the second housing portion 320 may be formed of a metal material or a non-metal material having a selected magnitude of rigidity to support the display module 350. For example, at least a portion formed of the metal material may provide a ground for the electronic device 300 and may be electrically connected to a ground formed on a PCB disposed in the housing 301.

In an embodiment, the first housing portion 310 may include a first rear cover 315 and a first side surface area 341. The first rear cover 315 may be coupled to the first side surface area 341. For example, the first rear cover 315 may have a substantially rectangular periphery that may be surrounded by the first side surface area 341.

In an embodiment, the second housing portion 320 may include a second rear cover 325 and a second side surface area 342. The second rear cover 325 may be coupled to the second side surface area 342. For example, the periphery of the second rear cover 325 may be surrounded by the second side surface area 342.

In an embodiment, the first rear cover 315 and the second rear cover 325 may have substantially symmetrical shapes with respect to the folding axis A. However, the first rear cover 315 and the second rear cover 325 do not necessarily have mutually symmetrical shapes. In an embodiment, the electronic device 300 may include the first rear cover 315 and the second rear cover 325 in various shapes. In an embodiment, the first rear cover 315 may be formed integrally with the first side surface area 341, and the second rear cover 325 may be formed integrally with the second side surface area 342.

In an embodiment, the first housing portion 310 and the second housing portion 320 may form a space in which various components (e.g., a PCB or a battery) of the electronic device 300 are to be disposed. In an embodiment, one or more components may be disposed or visually exposed on the rear surface of the electronic device 300.

For example, at least a portion of a sub-display may be visually exposed through a first rear area 316 of the first rear cover 315. In an embodiment, one or more components or sensors may be visually exposed through a second rear area 326 of the second rear cover 325. In an embodiment, the sensors may include a proximity sensor and/or a rear camera.

In an embodiment, In the electronic device 300, a front camera visually exposed to the front surface of the electronic device 300 through one or more openings provided in the sensor area 322 or a rear camera visually exposed through the second rear area 326 of the second rear cover 325 may include one or more lenses, an image sensor, and/or an ISP. A flash may include, for example, a light-emitting diode (LED) or a xenon lamp. In some embodiments, two or more lenses (e.g., infrared camera, wide-angle, and telephoto lenses) and image sensors may be arranged on one surface of the electronic device 300.

In an embodiment, referring to FIG. 2B, the hinge cover 330a may be disposed between the first housing portion 310 and the second housing portion 320 to cover internal components (e.g., the hinge unit 330). In an embodiment, the hinge unit 330 may be covered by a portion of the first housing portion 310 and a portion of the second housing portion 320, or may be exposed to the outside, depending on the state (e.g., the unfolded state, the intermediate state, or the folded state) of the electronic device 300.

In an embodiment, when the electronic device 300 is in the unfolded state (e.g., the fully unfolded state) as illustrated in FIG. 2A, the hinge unit 330 may be covered by the first housing portion 310 and the second housing portion 320 not to be substantially exposed.

In an embodiment, when the electronic device 300 is in the folded state (e.g., the fully folded state) as illustrated in FIG. 2B, the hinge unit 330 may be exposed to the outside between the first housing portion 310 and the second housing portion 320.

In an embodiment, in the intermediate state in which the first housing portion 310 and the second housing portion 320 form a certain angle, the hinge unit 330 may be partially exposed to the outside between the first housing portion 310 and the second housing portion 320. However, the area exposed in this case may be smaller than that in the fully folded state. In an embodiment, the hinge unit 330 may have a curved surface.

In an embodiment, the first side surface area 341 and the second side surface area 342 may be formed to surround at least a portion of a periphery area of the display module 350. For example, the first side surface area 341 and the second side surface area 342 may surround a front surface and/or a side surface of the periphery area of the display module 350. In an embodiment, the first side surface area 341 and the second side surface area 342 may be formed to surround at least a portion of a periphery area of the display module 350.

In an embodiment, the display module 350 may be disposed in a space formed by the housing 301. For example, the display module 350 may be seated in a recess formed by the housing 301 and may be viewed from the outside through the front surface of the electronic device 300. For example, the display module 350 may form most of the front surface of the electronic device 300. Accordingly, the front surface of the electronic device 300 may include the display module 350, and a partial area of the first housing portion 310 and a partial area of the second housing portion 320, which are adjacent to the display module 350. For example, the rear surface of the electronic device 300 may include the first rear cover 315, a partial area of the first housing portion 310 adjacent to the first rear cover 315, the second rear cover 325, and a partial area of the second housing portion 320 adjacent to the second rear cover 325.

In an embodiment, the display module 350 may refer to a display in which at least a partial area is deformable into a planar surface or a curved surface. According to an embodiment, the display module 350 may include a folding area 353, a first area 351 that is on one side of the folding area 353 (e.g., on the left side of the folding area 353 illustrated in FIG. 2A), and a second area 352 that is on the other side of the folding area 353 (e.g., on the right side of the folding area 253 illustrated in FIG. 2A). However, such area division of the display module 350 as illustrated in FIG. 2A is merely illustrative, and the display module 350 may be divided into a plurality of areas (e.g., four or more areas or two areas) depending on a structure or functions thereof. For example, as illustrated in FIG. 2A, the display module 350 may be divided into areas based on the folding area 353 extending in parallel to the folding axis A. In an embodiment, the display module 350 may be divided into areas based on another folding axis (e.g., a folding axis parallel to a width direction of an electronic device).

In an embodiment, the display module 350 may be coupled to or disposed adjacent to a touch panel including a touch sensing circuit and a pressure sensor for measuring a strength (a pressure) of a touch. For example, the display module 350 is an example of a touch panel, and may be coupled to or disposed adjacent to a touch panel for detecting an electromagnetic resonance (EMR) type stylus pen.

In an embodiment, the first area 351 and the second area 352 may have globally symmetrical shapes around the folding area 353. However, unlike the first area 351, the second area 352 may include a notch that is cut depending on a presence of the sensor area 322, but may have a shape symmetrical to the first area 351 in the other areas. For example, the first area 351 and the second area 352 may include portions having mutually symmetrical shapes and portions having mutually asymmetrical shapes.

In an embodiment, an edge thickness of each of the first area 351 and the second area 352 may be different from an edge thickness of the folding area 353. The edge thickness of the folding area 353 may be less than those of the first area 351 and the second area 352. For example, the first area 351 and the second area 352 may be asymmetrical in terms of the thickness when the first area 351 and the second area 352 are cross-sectionally viewed. For example, an edge of the first area 351 may be formed to have a first radius of curvature, and an edge of the second area 352 may be formed to have a second radius of curvature different from the first radius of curvature. In an embodiment, the first area 351 and the second area 352 may be symmetrical in terms of thickness when the first area 351 and the second area 352 are cross-sectionally viewed.

Hereinafter, each area of the display module 350, and operations of the first housing portion 310 and the second housing portion 320 depending on the state (e.g., the folded state, the unfolded state, or the intermediate state) of the electronic device 300 will be described.

In an embodiment, when the electronic device 300 is in the unfolded state (e.g., FIG. 2A), the first surface 310a of the first housing portion 310 and the third surface 320a of the second housing portion 320 may be arranged to face the same direction while forming an angle of about 180 degrees. The surface of the first area 351 and the surface of the second area 352 of the display module 350 may face the same direction (e.g., the front direction of the electronic device), forming 180 degrees. The folding area 353 may form the same plane in conjunction with the first area 351 and the second area 352.

In an embodiment, when the electronic device 300 is in the folded state (e.g., FIG. 2B), the first surface 310a of the first housing portion 310 and the third surface 320a of the second housing portion 320 may be arranged to face each other. The surface of the first area 351 and the surface of the second area 352 of the display module 350 may face each other while forming a narrow angle (e.g., between 0 degrees and 10 degrees). At least a portion of the folding area 353 may be changed to a curved surface having a predetermined curvature.

In an embodiment, when the electronic device 300 is in the intermediate state, the first housing portion 310 and the second housing portion 320 may be arranged to form a predetermined angle therebetween. The surface of the first area 351 of the display module 350 and the surface of the second area 352 thereof may form an angle greater than that in the folded state and smaller than that in the unfolded state. At least a portion of the folding area 353 may be changed to a curved surface having a predetermined curvature, and the curvature may be smaller than that in the folded state.

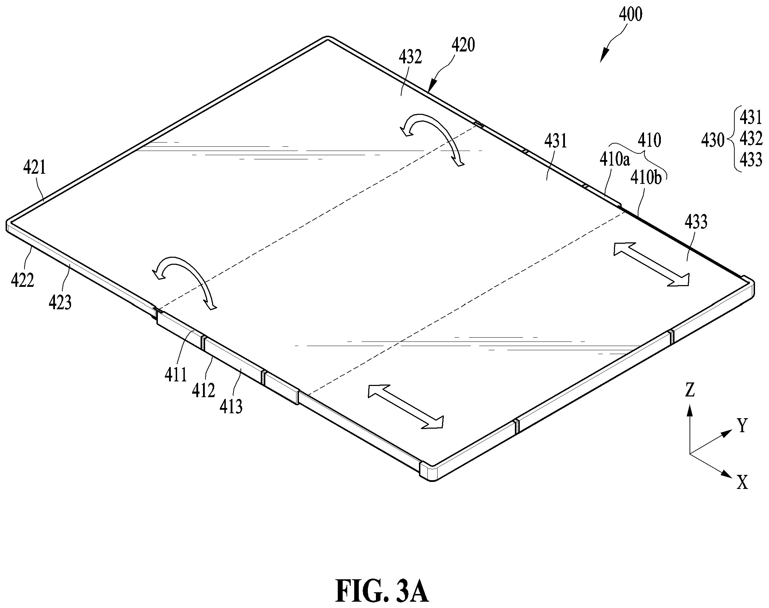

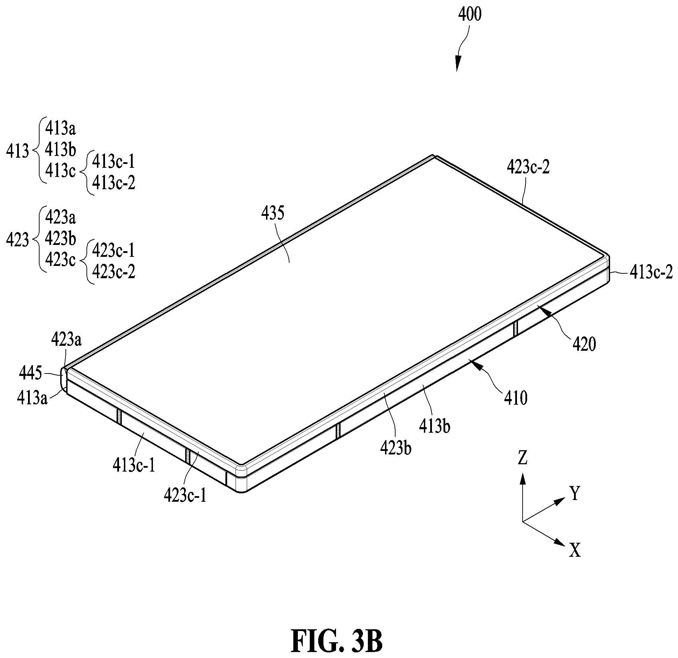

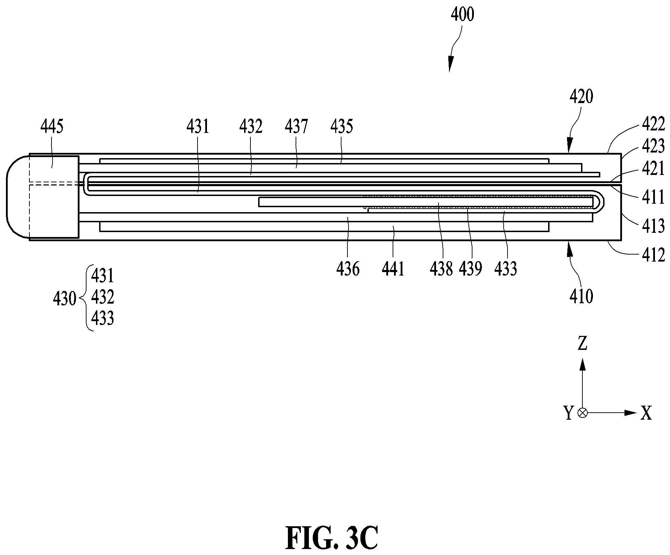

FIG. 3A is a diagram illustrating an unfolded state of an electronic device 400 according to an embodiment, FIG. 3B is a diagram illustrating a folded state of the electronic device 400 according to an embodiment, and FIG. 3C is a diagram schematically illustrating a cross-section of the electronic device 400 according to an embodiment.

Referring to FIGS. 3A, 3B, and 3C, the electronic device 400 according to an embodiment (e.g., the electronic device 101 of FIG. 1 or the electronic device 300 of FIGS. 2A and 2B) may include a housing 410, 420 (e.g., the housing 301 of FIGS. 2A and 2B).

Hereinafter, the description provided above is not repeated, and it is obvious that some components and structures of the electronic device 400 may be replaced, added, or omitted within a scope easily understandable by one of ordinary skill in the art with reference to the following drawings and descriptions. In addition, at least one component or feature of the embodiments described above may be coupled to the electronic device 400 unless this is technically and clearly infeasible.

In an embodiment, the electronic device 400 of FIGS. 3A to 3C may be an embodiment of the electronic device 101 of FIG. 1 described above.

In an embodiment, the electronic device 400 may be a foldable or bendable device. Alternatively, in an embodiment, the electronic device 400 may be a slidable, expandable, or rollable device. Alternatively, in an embodiment, the electronic device 400 may be a foldable and expandable hybrid type device.

In an embodiment, the electronic device 400 may include the housing 410, 420, a display 430 (e.g., the display module 160 of FIG. 1 or the display 350 of FIGS. 2A and 2B), and a hinge unit 445 (e.g., the hinge unit 330 of FIGS. 2A and 2B).

In an embodiment, the housing 410, 420 may form an exterior of the electronic device 400. The housing 410, 420 may include a first housing portion 410 and a second housing portion 420. The first housing portion 410 and the second housing portion 420 may be foldably connected through the hinge unit 445. For example, the hinge unit 445 may include a hinge cover that covers foldable portions of the first housing portion 410 and the second housing portion 420. The first housing portion 410 and the second housing portion 420 are not limited to have the shape and combination illustrated in FIGS. 3A to 3C and may be implemented in a different shape or a different combination of components.

In an embodiment, the first housing portion 410 may include a first surface 411 facing a first direction (e.g., a +Z direction,) and a second surface 412 facing a second direction (e.g., a -Z direction) that is opposite to the first direction, based on a state of FIG. 3A (e.g., the unfolded state). In an embodiment, the first housing portion 410 may include a plurality of first side surface areas 413 connected from the first surface 411 to the second surface 412. The plurality of first side surface areas 413 may be formed of a metal material or a conductive material in at least a partial area.

In an embodiment, the plurality of first side surface areas 413 may include a first side surface 413a facing the hinge unit 445, a second side surface 413b facing the first side surface 413a, and a plurality of third side surfaces 413c-1 and 413c-2 connected from the first side surface 413a to the second side surface 413b. The plurality of third side surfaces 413c-1 and 413c-2 may include a first lower side surface 413c-1 and a first upper side surface 413c-2.

In an embodiment, the second housing portion 420 may include a third surface 421 facing the first direction and a fourth surface 422 facing the second direction based on the state of FIG. 3A (e.g., the unfolded state). In an embodiment, the second housing portion 420 may include a plurality of second side surface areas 423 connected from the third surface 421 to the fourth surface 422. The plurality of second side surface areas 423 may be formed of a metal material or a conductive material in at least a partial area.

In an embodiment, the plurality of second side surface areas 423 may include a fourth side surface 423a facing the hinge unit 445, a fifth side surface 423b facing the fourth side surface 423a, and a plurality of sixth side surfaces 423c-1 and 423c-2 connected from the fourth side surface 423a to the fifth side surface 423b. The plurality of sixth side surfaces 423c-1 and 423c-2 may include a second lower side surface 423c-1 and a second upper side surface 423c-2.

In an embodiment, the hinge unit 445 may foldably connect the first housing portion 410 to the second housing portion 420. The hinge unit 445 may be driven between the folded state in which the first surface 411 and the third surface 421 face each other (e.g., the state of the electronic device 400 of FIGS. 3B and 3C) and the unfolded state in which the first surface 411 and the third surface 421 do not face each other (e.g., the state of the electronic device 400 of FIG. 3A).

In an embodiment, any one of the first housing portion 410 and the second housing portion 420 may rotate relative to each other about the hinge unit 445. By the rotation of the first housing portion 410 and the second housing portion 420, the electronic device 400 may be changed into the folded state (a folding state) or the unfolded state (an unfolded state).

In an embodiment, the first surface 411 may face the third surface 421 in the fully folded state of the electronic device 400, and the directions that the first surface 411 and the third surface 421 face may be substantially identical in the fully unfolded state.

However, the term "substantially" herein may be the same level reflecting a tolerance or an error in a general manufacturing process. Alternatively, the term "substantially" may be a range including any one range of +/-0.1%, +/-0.5%, +/-1%, +/-3%, +/-5%, +/-7%, +/-10%, +/-15%, and +/-20%, based on the literally same 0%.

In an embodiment, at least a portion of the first housing portion 410 and the second housing portion 420 may be formed of a metal material or a non-metal material having a selected magnitude of rigidity to support the display module 430.

In an embodiment, at least some areas (e.g., the plurality of first side surface areas 413 or the plurality of second side surface areas 423) of the housing 410, 420 formed of a metal material may be connected to a ground of the electronic device 400. For example, some areas of the housing 410, 420 connected to the ground may function as a ground. Alternatively, for example, at least some areas (e.g., the plurality of first side surface areas 413 or the plurality of second side surface areas 423) of the housing 410, 420 may operate as an antenna radiator.

In an embodiment, the first housing portion 410 and the second housing portion 420 may form a space in which various components (e.g., a first PCB 441 or a battery (e.g., the battery 189 of FIG. 1)) of the electronic device 400 may be disposed. For example, the first PCB 441 may be a main PCB of the electronic device 400 and may include at least one processor (e.g., the processor 120 of FIG. 1), at least one memory (e.g., the memory 130 of FIG. 1), and an antenna module (e.g., the antenna module 197 of FIG. 1).

In an embodiment, the hinge unit 445 may be disposed between the first housing portion 410 and the second housing portion 420 and may be covered by a hinge cover. The hinge cover may conceal internal components.

In an embodiment, the first housing portion 410 may be a slidable housing. The first housing portion 410 may include a main housing 410a and an extension housing 410b. In an embodiment, the main housing 410a may be a main area of the first housing portion 410 connected to the second housing portion 420. The extension housing 410b may be an extension area that is movable relative to the main housing 410a.

In an embodiment, the extension housing 410b may be connected so as to slide relative to the main housing 410a. For example, the extension housing 410b may be able to move in a first movement direction (e.g., a +X direction) relative to the main housing 410a or in a second movement direction (e.g., a -X direction) opposite to the first movement direction. Hereinafter, in various embodiments provided herein, the extension housing 410b is described as moving relative to the main housing 410a, but this is for the description of the relative movement of the main housing 410a and the extension housing 410b to each other. Thus, it may also be understood that the main housing 410a moves relative to the extension housing 410b.

In an embodiment, according to the relative movement of the main housing 410b and the extension housing 410a, a state of the electronic device 400 may be changed between a first state and a second state. In an embodiment, the electronic device 400 may have a reduced shape in the first state (e.g., the state of FIGS. 3B and 3C) and an expanded shape in the second state (e.g., the state of FIG. 3A). The electronic device 400 may be used in the first state or the second state, or may be used in an intermediate state between the first state and the second state.

In an embodiment, the display 430 may include a flexible display panel disposed within a space formed by a plurality of housings. Based on the unfolded state (e.g., the state of FIG. 3A), a surface on which the display 430 is disposed (or a surface from which the display 430 is viewed from outside the electronic device 400) may be defined as a front surface of the electronic device 400. In addition, a surface opposite to the front surface may be defined as a rear surface of the electronic device 400. In addition, a surface surrounding a space between the front surface and the rear surface may be defined as a side surface of the electronic device 400.

In an embodiment, the display 430 may include a first area 431, a second area 432, and a third area 433. The first area 431 and the third area 433 may be disposed in the first housing portion 410, and the second area 432 may be disposed in the second housing portion 420. In an embodiment, the area of the third area 433 may be changed by the relative movement of the extension housing 410b.

For example, when one side surface of the extension housing 410b moves away from the main housing 410a, the third area 433 may be moved from the inside of the first housing portion 410 to the outside and may be visually exposed. For example, when the one side surface of the extension housing 410b approaches the main housing 410a, the third area 433 may be inserted into the inside of the first housing portion 410 from the outside. The processor of the electronic device 400 may control a screen displayed by the display 430 based on the visual exposure state of the third area 433.

In an embodiment, the electronic device 400 may further include a sub-display 435. The sub-display 435 may be disposed on the opposite side of the display 430 in the electronic device 400. For example, the sub-display 435 may be disposed to be visually exposed on the fourth surface 422 of the second housing portion 420. For example, the sub-display 435 may be driven when the electronic device 400 is in the folded state or in a standby state.

In an embodiment, a first bracket 436 may be disposed inside the first housing portion 410. The first bracket 436 may support a component disposed inside the first housing portion 410, for example, the first area 431 and the third area 433 of the display 430, or the first PCB 441. A second bracket 437 may be disposed inside the second housing portion 420. The second bracket 437 may support a component disposed inside the second housing portion 420, for example, the second area 432 or the sub-display 435 of the display 430.

In an embodiment, a guide rail 438 may be provided in the first housing portion 410. The guide rail 438 may be connected to the main housing 410a and the extension housing 410b. In an embodiment, at least a portion of the guide rail 438 may be fixed to the main housing 410a, and the remaining portion of the guide rail 438 may be connected to the extension housing 410b to assist the extension housing 410b in moving relative to the main housing 410a.

In an embodiment, the guide rail 438 may be connected to a multi bar 439. The multi bar 439 may support the display 430 during a process in which the display 430 is flexibly bent. The multi bar 439 may prevent or reduce damage to the display panel.

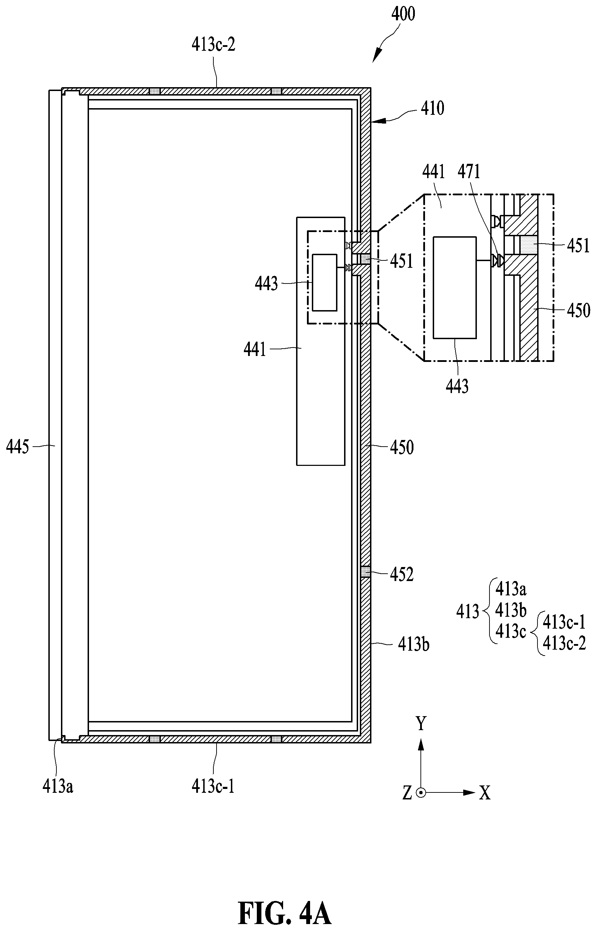

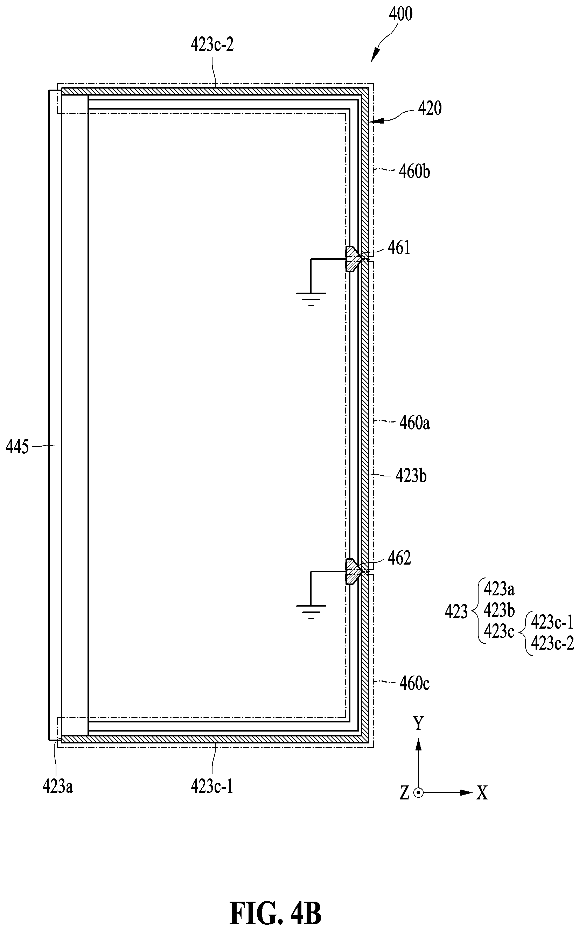

FIG. 4A is a plan view of the first housing portion 410 of the electronic device 400 according to an embodiment, and FIG. 4B is a plan view of the second housing portion 420 of the electronic device 400 according to an embodiment.

Referring to FIGS. 4A and 4B, the electronic device 400 according to an embodiment may include an antenna element 450 and a slot 460a.

Hereinafter, the description provided above is not repeated, and it is apparent that some components and structures of the electronic device 400 may be replaced, added, or omitted within a scope easily understandable by one of ordinary skill in the art with reference to the following drawings and descriptions. In addition, at least one component or feature of the embodiments described above may be coupled to the electronic device 400 unless this is technically and clearly infeasible.

In an embodiment, the plurality of first side surface areas 413 may include at least one split unit. For example, the at least one split unit may include at least one of a first split unit 451 and a second split unit 452. For example, a non-metal or non-conductive material may be disposed in the first split unit 451 and the second split unit 452.

In an embodiment, a partial area of the plurality of first side surface areas 413 between the first split unit 451 and the second split unit 452 may operate as an antenna radiator. In the following description, the partial area of the plurality of first side surface areas 413 between the first split unit 451 and the second split unit 452 that may operate as an antenna radiator will be described as the "antenna element 450." The antenna element 450 may be positioned in a partial area of the plurality of first side surface areas 413. Alternatively, the antenna element 450 may include a conductive portion between the first split unit 451 and the second split unit 452.

In an embodiment, the antenna element 450 may have a shape extending from the first split unit 451. Alternatively, the antenna element 450 may be provided between the first split unit 451 and the second split unit 452.

However, embodiments are not limited thereto, and the plurality of first side surface areas 413 may form the antenna element 450 with only one split unit (e.g., the first split unit 451). For example, one end portion of the antenna element 450 may face the first split unit 451, and the other end portion of the antenna element 450 may extend to an end portion of the first side surface area 413 (e.g., a contact point of the first side surface 413a and the second lower side surface 413c-1), so that the plurality of first side surface areas 413 may form one antenna element 450.

In an embodiment, a first power feeding unit 471 may be electrically connected to the antenna element 450. The antenna element 450 may be connected to a wireless communication circuit 443 (e.g., the antenna module 197 of FIG. 1) through the first power feeding unit 471.

In an embodiment, the wireless communication circuit 443 may be disposed inside the first housing portion 410 and, for example, on the first PCB 441. The wireless communication circuit 443 may transmit and receive a communication signal to and from the antenna element 450 and/or the slot 460a through the first power feeding unit 471.

In an embodiment, the antenna element 450 may receive a communication signal from the outside or transmit a communication signal to the outside. The electronic device 400 may provide enhanced communication performance by utilizing at least a portion of the plurality of first side surface areas 413 of the first housing portion 410 as the antenna element 450.

In an embodiment, the plurality of second side surface areas 423 may be connected to at least one ground unit. For example, the at least one ground unit may include at least one of a first ground unit 461 and a second ground unit 462. The first ground unit 461 and the second ground unit 462 may be formed of a metal material or a conductive material. The first ground unit 461 and the second ground unit 462 may be connected to a ground inside the second housing portion 420.

In an embodiment, at least one slot 460a, 460b, 460c may be formed in the plurality of second side surface areas 423 by the first ground unit 461 and/or the second ground unit 462. For example, the at least one slot 460a, 460b, 460c may be surrounded by at least one ground unit (e.g., the first ground unit 461), a partial area of the second housing portion 420, and a ground provided inside the second housing portion 420.

In an embodiment, the at least one slot 460a, 460b, 460c may include at least one of the first slot 460a, a second slot 460b, and a third slot 460c. For example, the first slot 460a may be formed between the first ground unit 461 and the second ground unit 462. Alternatively, for example, the second slot 460b may be formed between the first ground unit 461 and another ground point or an end portion of the second side surface area 423. Alternatively, for example, the third slot 460c may be formed between the second ground unit 462 and another ground point or an end portion of the second side surface area 423.

In the following description, unless otherwise noted, the first slot 460a formed between the first ground unit 461 and the second ground unit 462 is referred to as the "slot 460a", and the description of the "slot 460a" may be substantially applied to other slots 460b and 460c.

In an embodiment, the slot 460a may be formed between the first ground unit 461 and the second ground unit 462. The slot 460a may have a shape extending from the first ground unit 461. For example, the slot 460a may be provided between the first ground unit 461 and the second ground unit 462.

However, embodiments are not limited thereto, and the plurality of second side surface areas 423 may form the slot 460a with only one ground unit (e.g., the first ground unit 461). For example, the first ground unit 461 of the slot 460a corresponds to the first split unit 451, and one end portion of the slot 460a may be formed at a position corresponding to the second split unit 452.

In an embodiment, the slot 460a may be formed to substantially correspond to the antenna element 450 in the folded state of the electronic device 400. For example, based on the folded state, the first split unit 451 and the first ground unit 461 may be formed at a position substantially facing each other, and the second split unit 452 and the second ground unit 462 may be formed at a position substantially facing each other.

In an embodiment, since the slot 460a is positioned to substantially correspond to the antenna element 450, a separate power feeding unit connected to the slot 460a may be omitted, and the slot 460a may be coupled to the antenna element 450 and allow a current of the same phase as the antenna element 450 to flow, thereby operating as a slot antenna.

Here, the "position substantially facing each other" may refer to a position overlapped by each other based on the plan view of the electronic device 400. Alternatively, the "position substantially facing each other" may refer to a position where the antenna element 450 and the slot 460a substantially overlap each other by the first split unit 451, the second split unit 452, the first ground unit 461, and the second ground unit 462.

However, the term "substantially" herein may be the same level reflecting a tolerance or an error in a general manufacturing process. Alternatively, the term "substantially" may be a range including any one range of +/-0.1%, +/-0.5%, +/-1%, +/-3%, +/-5%, +/-7%, +/-10%, +/-15%, and +/-20%, based on the literally same 0%.

In an embodiment, the first split unit 451 and the second split unit 452 may be disposed on the second side surface 413b among the plurality of first side surface areas 413. The antenna element 450 may be formed on the second side surface 413b. In an embodiment, the first ground unit 461 and the second ground unit 462 may be disposed on the fifth side surface 423b among the plurality of second side surface areas 423.

In an embodiment, the slot 460a may be formed adjacent to the fifth side surface 423b. For example, the slot 460a may be formed in a bracket (or a support member) positioned inside the second housing portion 420.

In an embodiment of the disclosure, the antenna element 450 and the slot 460a may be formed on a surface on a right side (e.g., the +X direction) (or a surface on a left side (e.g., the -X direction)) of the electronic device 400. For example, the electronic device 400 may have a major axis (e.g., a Y-axis direction) and a minor axis (e.g., an X-axis direction).

In an embodiment of the disclosure, the antenna element 450 and the slot 460a are formed on a right side surface parallel to the major axis of the electronic device 400, so that a length of the antenna element 450 and the slot 460a may be increased, which is advantageous for securing the antenna performance of the electronic device 400.

In an embodiment, a current of substantially the same phase may flow through the slot 460a and the antenna element 450 in the folded state of the electronic device 400. Since the current of the same phase flows through the slot 460a and the antenna element 450, the electronic device 400 may provide improved antenna performance in the folded state.

For example, in the foldable and/or slidable electronic device 400, an overlap between metals acting as antenna radiators may occur by the driving of the first housing portion 410 and/or the second housing portion 420. If the metal overlap occurs, it may affect each other, thereby degrading radiation performance of the antenna.

In an embodiment of the disclosure, the electronic device 400 includes the slot 460a of the second housing portion 420 that is disposed to correspond to a metal (e.g., the antenna element 450) of the first housing portion 410 in the folded state, thereby reducing or preventing the degradation of radiation performance even when the metals overlap.

In an embodiment of the disclosure, the antenna element 450 and the slot 460a are arranged to substantially face each other, which may be advantageous for securing the antenna performance of the electronic device 400.

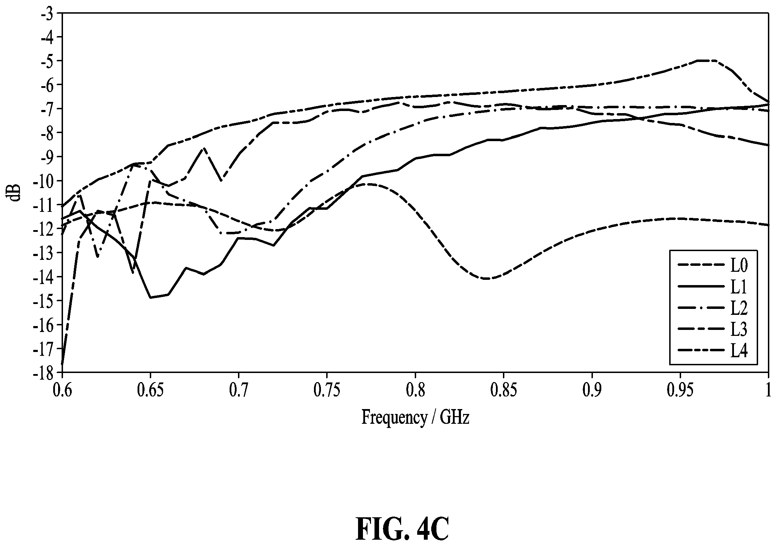

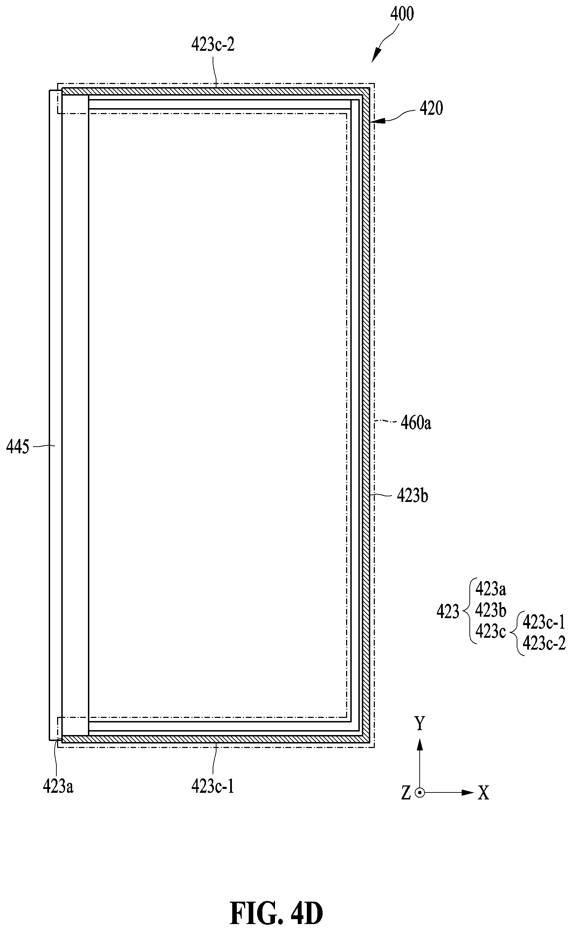

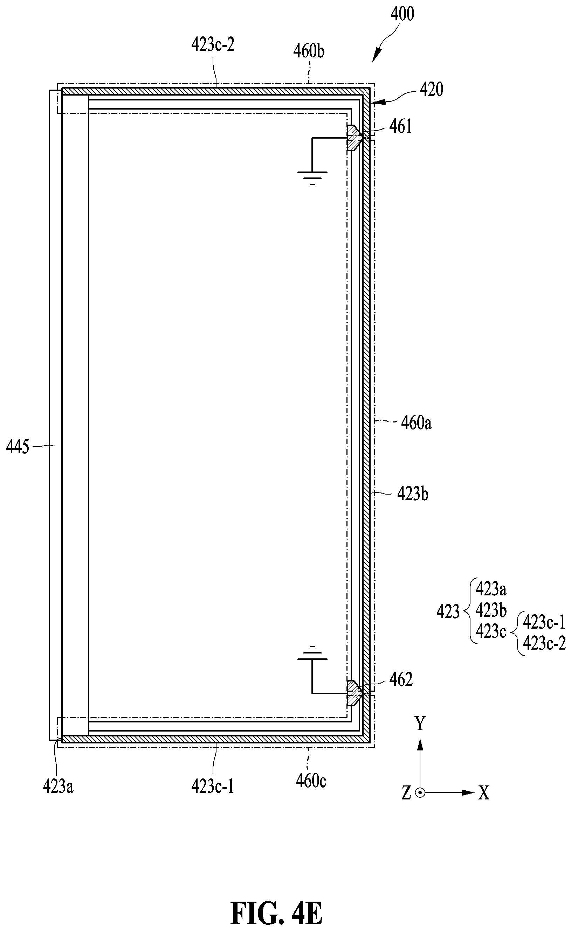

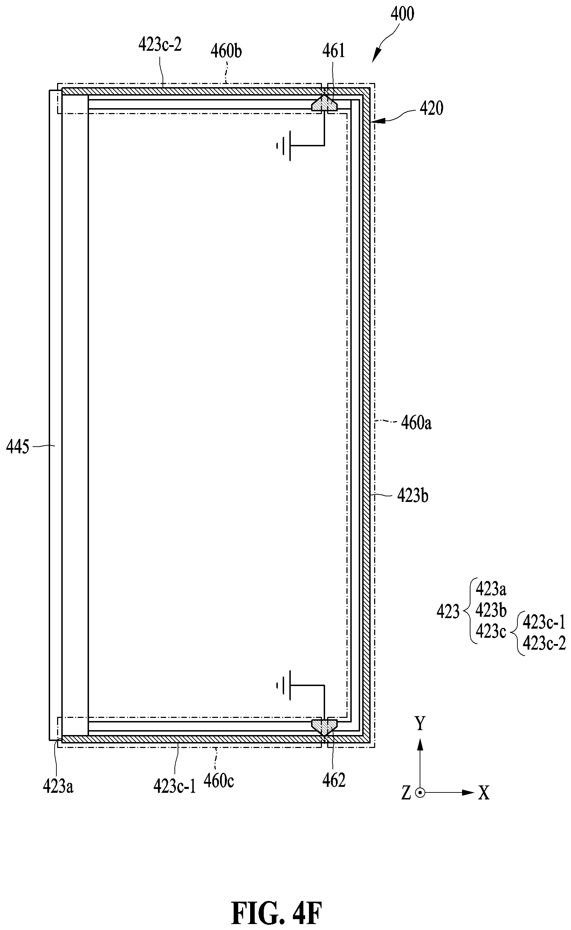

FIG. 4C is a graph of radiation efficiency depending on a frequency band of a plurality of embodiments, and FIGS. 4D, 4E, and 4F are plan views of the second housing portion 420 of an electronic device according to an embodiment.

Referring to FIG. 4C, each of LO, L1, L2, and L3 is a graph showing the radiation efficiency of the electronic device 400 according to an embodiment including the first housing portion 410 as in FIG. 4A and including the second housing portion 420 that is different from FIG. 4B.

For example, L0 is a graph of a case in which the second housing portion 420 does not include the first ground unit 461 and the slot 460a.

For example, L1 is a graph for FIG. 4D in which the second housing portion 420 does not include the first ground unit 461 and the entire corresponding to the plurality of second side surface areas 423 is driven by the slot 460a.

For example, L2 is a graph for FIG. 4E in which the slot 460a extends longer than the antenna element 450 on the fifth side surface 423b.

For example, L3 is a graph for FIG. 4F in which the slot 460a extends from the fifth side surface 423b to the plurality of sixth side surfaces 423c-1 and 423c-2 and extends longer than the antenna element 450.

For example, L4 is a graph showing the radiation efficiency of the electronic device 400 according to an embodiment including the second housing portion 420 as in FIG. 4B.

In FIG. 4C, with reference to an example target frequency band (e.g., 0.95 to 1.05 GHz), it may be seen that the radiation efficiency of L4, in which the antenna element 450 and the slot 460a are arranged to substantially face each other, is most excellent. In an embodiment of the disclosure, the first split unit 451, the second split unit 452, the first ground unit 461, and the second ground unit 462 are arranged so as to face each other, and thus, the electronic device 400 may provide the improved antenna radiation efficiency.

According to an embodiment of the disclosure, the second housing portion 420 may secure communication performance of the electronic device 400 through the slot 460a and may also help lighten and/or slim down the electronic device 400.

For example, the second housing portion 420 may form the slot 460 through the first ground unit 461 without a separate segmental structure. The segmental structure formed on the side surface may require a thickness greater than or equal to a predetermined value of the side surface area 423. According to an embodiment of the disclosure, the second housing portion 420 may provide communication performance of the electronic device 400 and may be advantageous for slimming and weight reduction by implementing the slot 460a through the first ground unit 461, compared to the case including a segmental structure.

For example, since the slot 460a is communicatively connected to the wireless communication circuit 443 of the first housing portion 410, a separate PCB and antenna module may not be required in the second housing portion 420. The electronic device 400 according to an embodiment of the disclosure may be advantageous for the weight reduction/slimming and may ensure manufacturing efficiency and economy.

In an embodiment, the plurality of second side surface areas 423 may be formed as a non-segmental structure. The electronic device 400 according to an embodiment of the disclosure may have a thinner thickness of the second housing portion 420 by including the slot 460a without including the segmental structure in the second housing portion 420.

The electronic device 400 according to an embodiment of the disclosure may be advantageously applied in a case where one housing is formed thinner than another housing as a functional or design element of the electronic device 400.

In an embodiment, the first housing portion 410 and the second housing portion 420 may have different thicknesses. For example, as shown in FIGS. 3A to 3C, the second housing portion 420 may have a relatively thinner thickness than the first housing portion 410.

In an embodiment, since the first housing portion 410 is slidably driven, the first housing portion 410 may include elements such as the guide rail 438, the multi-bar 439, the first area 431, and the third area 433, and may be relatively thicker than the second housing portion 420.

In an embodiment of the disclosure, since the second housing portion 420 is formed in the non-segmental structure, the second housing portion 420 may be formed relatively thinner than when including a segmental structure, thereby ensuring the communication performance and helping to slim down and lighten the electronic device 400. Alternatively, the second housing portion 420 may be formed in the non-segmental structure, thereby providing rigidity.

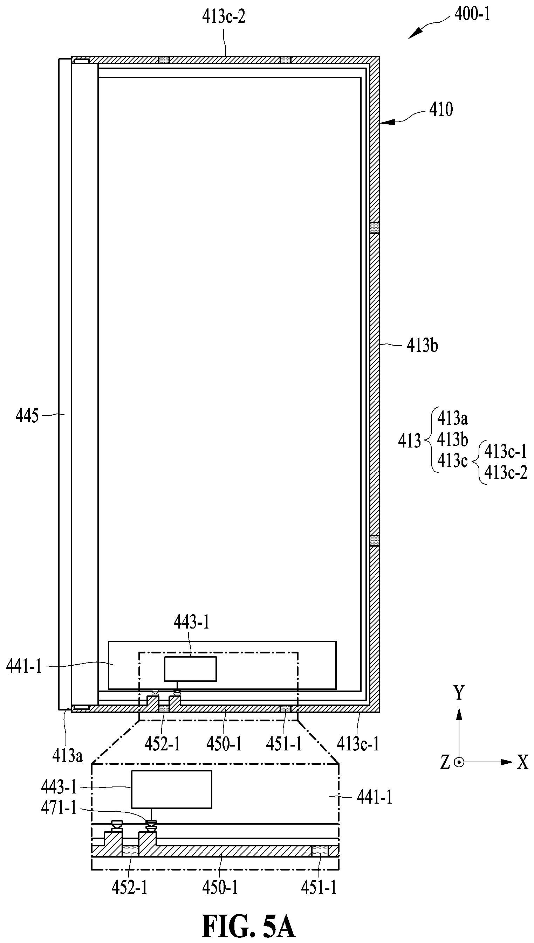

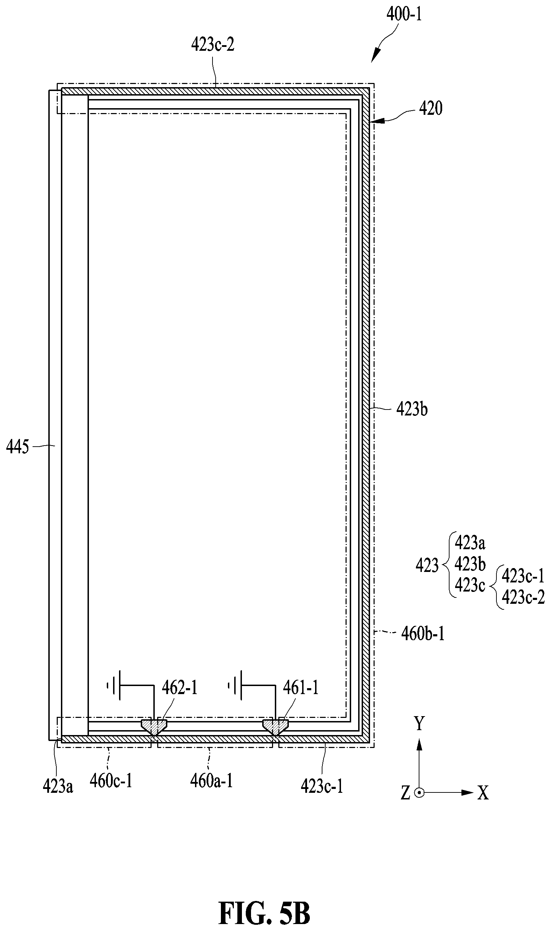

FIG. 5A is a plan view of the first housing portion 410 of an electronic device 400-1 according to an embodiment, and FIG. 5B is a plan view of the second housing portion 420 of the electronic device 400-1 according to an embodiment.

Referring to FIGS. 5A and 5B, the electronic device 400-1 according to an embodiment (e.g., the electronic device 101 of FIG. 1, the electronic device 300 of FIG. 2A and 2B, or the electronic device 400 of FIG. 3A to 4B) may include an antenna element 450-1 and a slot 460a-1.

Hereinafter, the description provided above is not repeated, and it is apparent that some components and structures of the electronic device 400-1 may be replaced, added, or omitted within a scope easily understandable by one of ordinary skill in the art with reference to the following drawings and descriptions. In addition, at least one component or feature of the embodiments described above may be coupled to the electronic device 400-1 unless this is technically and clearly infeasible.

In an embodiment, the plurality of first side surface areas 413 may include at least one split unit. For example, the at least one split unit may include at least one of a first split unit 451-1 and a second split unit 452-2. For example, a non-metal or non-conductive material may be disposed in the first split unit 451-1 and the second split unit 452-2.

In an embodiment, a partial area of the plurality of first side surface areas 413 between the first split unit 451-1 and the second split unit 452-2 may operate as an antenna radiator. In the following description, the partial area of the plurality of first side surface areas 413 between the first split unit 451-1 and the second split unit 452-2 that may operate as an antenna radiator will be described as the "antenna element 450-1." The antenna element 450-1 may be formed as a partial area of the plurality of first side surface areas 413. Alternatively, the antenna element 450-1 may be a conductive portion between the first split unit 451-1 and the second split unit 452-2.

The antenna element 450-1 may have a shape extending from the first split unit 451-1. Alternatively, the antenna element 450-1 may be provided between the first split unit 451-1 and the second split unit 452-1.

However, embodiments are not limited thereto, and the plurality of first side surface areas 413 may form the antenna element 450-1 with only one split unit (e.g., the first split unit 451-1). For example, one end portion of the antenna element 450-1 may face the first split unit 451-1, and the other end portion of the antenna element 450-1 may extend to an end portion of the first side surface area 413 (e.g., a contact point of the first side surface 413a and the second lower side surface 413c-1), so that the plurality of first side surface areas 413 may form one antenna element 450-1.

In an embodiment, a first power feeding unit 471-1 may be electrically connected to the antenna element 450-1. The antenna element 450-1 may be connected to a wireless communication circuit 443-1 (e.g., the antenna module 197 of FIG. 1) through the first power feeding unit 471-1.

In an embodiment, the wireless communication circuit 443-1 may be disposed inside the first housing portion 410 and, for example, on a first PCB 441-1. The wireless communication circuit 443-1 may transmit and receive a communication signal to and from the antenna element 450-1 and/or the slot 460a-1 through the first power feeding unit 471-1.

In an embodiment, the antenna element 450-1 may receive a communication signal from the outside or transmit a communication signal to the outside. The electronic device 400-1 may provide enhanced communication performance by utilizing at least a portion of the plurality of first side surface areas 413 of the first housing portion 410 as the antenna element 450-1.

In an embodiment, the plurality of second side surface areas 423 may be connected to at least one ground unit. For example, the at least one ground unit may include at least one of a first ground unit 461-1 and a second ground unit 462-1. The first ground unit 461-1 and the second ground unit 462-1 may be formed of a metal material or a conductive material. The first ground unit 461-1 and the second ground unit 462-1 may be connected to a ground inside the second housing portion 420.

In an embodiment, at least one slot 460a-1, 460b-1, 460c-1 may be formed in the plurality of second side surface areas 423 by the first ground unit 461-1 and/or the second ground unit 462-1. For example, the at least one slot 460a-1, 460b-1, 460c-1 may be surrounded by at least one ground unit (e.g., the first ground unit 461-1), a partial area of the second housing portion 420, and a ground provided inside the second housing portion 420.

In an embodiment, the at least one slot 460a-1, 460b-1, 460c-1 may include at least one of the first slot 460a-1, a second slot 460b-1, and a third slot 460c-1. For example, the first slot 460a-1 may be formed between the first ground unit 461-1 and the second ground unit 462-1. Alternatively, for example, the second slot 460b-1 may be formed between the first ground unit 461-1 and another ground point or an end portion of the second side surface area 423. Alternatively, for example, the third slot 460c-1 may be formed between the second ground unit 462-1 and another ground point or an end portion of the second side surface area 423.

In the following description, unless otherwise noted, the first slot 460a-1 formed between the first ground unit 461-1 and the second ground unit 462-1 is referred to as the "slot 460a-1", and the description of the "slot 460a-1" may be substantially applied to other slots 460b-1 and 460c-1.

In an embodiment, the slot 460a-1 may be formed between the first ground unit 461-1 and the second ground unit 462-1. The slot 460a-1 may have a shape extending from the first ground unit 461-1. For example, the slot 460a-1 may be provided between the first ground unit 461-1 and the second ground unit 462-1.

For example, the slot 460a-1 may be surrounded by at least one ground unit (e.g., the first ground unit 461), a partial area of the second housing portion 420, and a ground provided inside the second housing portion 420.

However, embodiments are not limited thereto, and the plurality of second side surface areas 423 may form the slot 460a-1 with only one ground unit (e.g., the first ground unit 461-1). For example, the first ground unit 461-1 of the slot 460a-1 may face the first split unit 451, and one end portion of the slot 460a-1 may be formed at a position corresponding to the second split unit 452.

In an embodiment, the slot 460a-1 may be formed to substantially correspond to the antenna element 450-1 in the folded state of the electronic device 400-1. For example, based on the folded state, the first split unit 451-1 and the first ground unit 461-1 may be formed at a position substantially facing each other, and the second split unit 452-1 and the second ground unit 462-1 may be formed at a position substantially facing each other.

In an embodiment, since the slot 460a-1 is positioned to substantially correspond to the antenna element 450-1, a separate power feeding unit connected to the slot 460a-1 may be omitted, and the slot 460a-1 may be coupled to the antenna element 450-1 and allow a current of the same phase as the antenna element 450-1 to flow, thereby operating as a slot antenna.

Here, the "position substantially facing each other" may refer to a position overlapped by each other based on the plan view of the electronic device 400-1. Alternatively, the "position substantially facing each other" may refer to a position where the antenna element 450-1 and the slot 460a-1 substantially overlap each other by the first split unit 451-1, the second split unit 452-1, the first ground unit 461-1, and the second ground unit 462-1.

However, the term "substantially" herein may be the same level reflecting a tolerance or an error in a general manufacturing process. Alternatively, the term "substantially" may be a range including any one range of +/-0.1%, +/-0.5%, +/-1%, +/-3%, +/-5%, +/-7%, +/-10%, +/-15%, and +/-20%, based on the literally same 0%.

In an embodiment, the first split unit 451-1 and the second split unit 452-1 may be disposed on any one of the plurality of third side surfaces 413c-1 and 413c-2. For example, the first split unit 451-1 and the second split unit 452-1 may be disposed on the first lower side surface 413c-1. The antenna element 450-1 may be disposed between the first split unit 451-1 and the second split unit 452-1, and, for example, may be disposed on the first lower side surface 413c-1.

In an embodiment, the first ground unit 461-1 and the second ground unit 462-1 may be disposed adjacent to any one of the plurality of sixth side surfaces 423c-1 and 423c-2. For example, the first ground unit 461-1 and the second ground unit 462-1 may be disposed on the second lower side surface 423c-1. The slot 460a-1 may be disposed between the first ground unit 461-1 and the second ground unit 462-1, and, for example, may be disposed on the second lower side surface 423c-1. For example, the slot 460a may be formed in a bracket (or a support member) positioned inside the second housing portion 420.

In an embodiment of the disclosure, the antenna element 450-1 and the slot 460a-1 may be formed on a surface on a lower side (e.g., the -Y direction) (or a surface on an upper side (e.g., the +Y direction)) of the electronic device 400-1. For example, the electronic device 400-1 may have a major axis (e.g., the Y-axis direction) and a minor axis (e.g., the X-axis direction). A user may grip the electronic device 400-1 along the major axis of the electronic device 400-1. While the user directly grips the antenna element 450-1 and the slot 460a-1, there is a possibility that the communication performance of the antenna element 450-1 and the slot 460a-1 is degraded.

In an embodiment of the disclosure, the antenna element 450-1 and the slot 460a-1 are formed on a plane parallel to the minor axis of the electronic device 400-1. Accordingly, performance degradation caused by the user may be reduced or prevented, and the antenna element 450-1 and the slot 460a-1 may be advantageous for securing the antenna performance of the electronic device 400-1.

In an embodiment, a current of substantially the same phase may flow through the slot 460a-1 and the antenna element 450-1 in the folded state of the electronic device 400-1. Since the current of the same phase flows through the slot 460a-1 and the antenna element 450-1, the electronic device 400-1 may provide improved antenna performance in the folded state.

For example, in the foldable and/or slidable electronic device 400-1, an overlap between metals acting as antenna radiators may occur by the driving of the first housing portion 410 and/or the second housing portion 420. If the metal overlap occurs, it may affect each other, thereby degrading radiation performance of the antenna.

In an embodiment of the disclosure, the electronic device 400-1 includes the slot 460a-1 of the second housing portion 420 that is disposed to correspond to a metal (e.g., the antenna element 450-1) of the first housing portion 410 in the folded state, thereby reducing or preventing the degradation of radiation performance even when the metals overlap.

In an embodiment of the disclosure, the antenna element 450-1 and the slot 460a-1 are arranged to substantially face each other, which may be advantageous for securing the antenna performance of the electronic device 400-1.

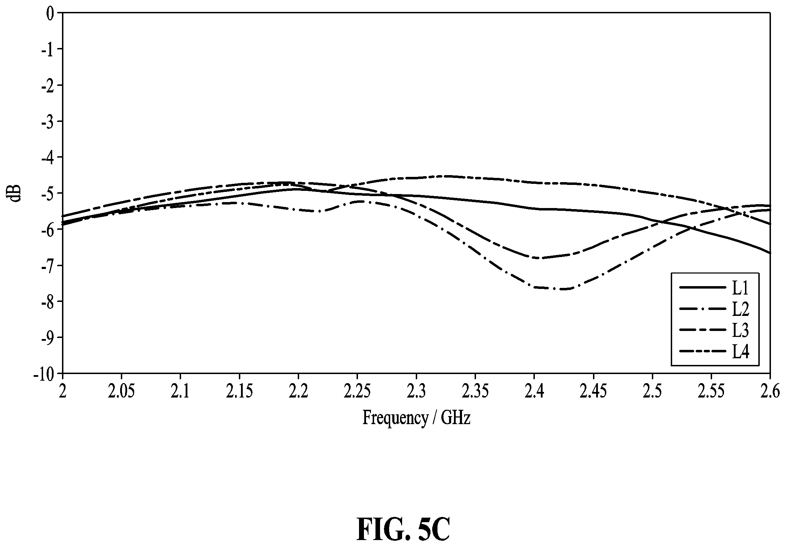

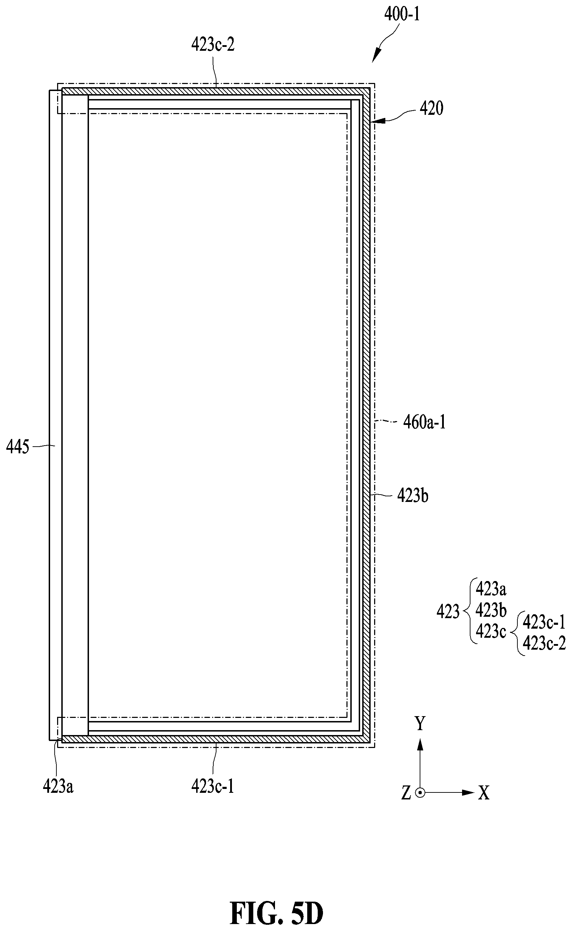

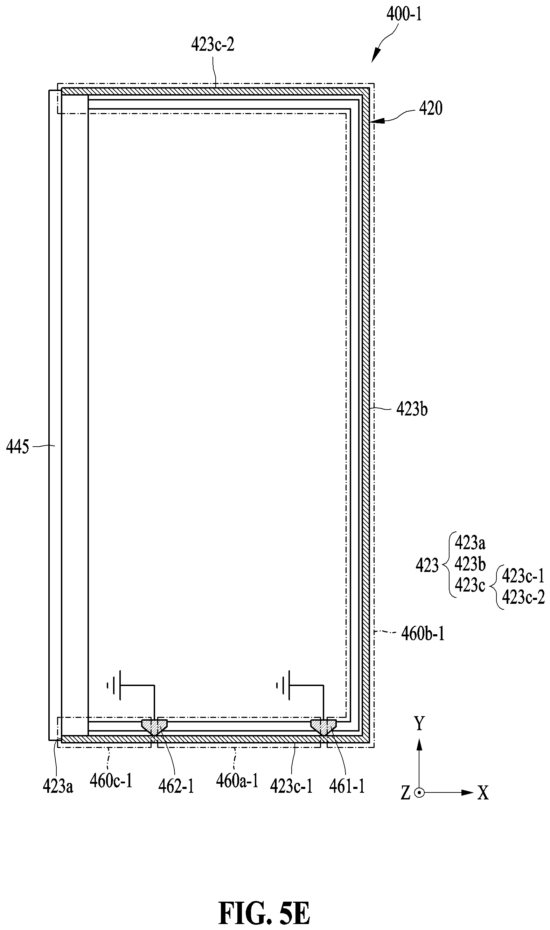

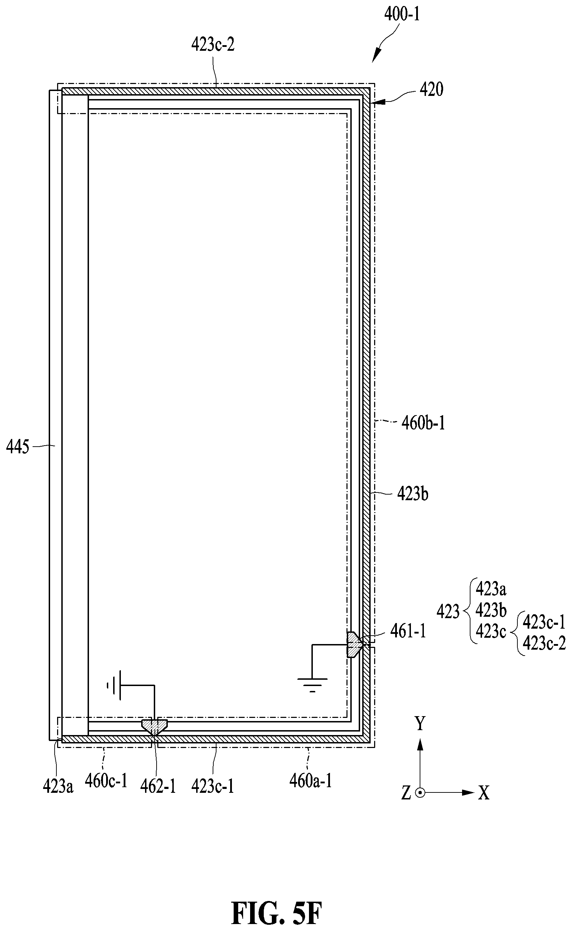

FIG. 5C is a graph of radiation efficiency depending on a frequency band of a plurality of embodiments, and FIGS. 5D, 5E, and 5F are plan views of the second housing portion 420 of an electronic device according to an embodiment.

Referring to FIG. 5C, each of L1, L2, and L3 is a graph showing the radiation efficiency of the electronic device 400-1 according to an embodiment including the first housing portion 410 as in FIG. 5A and including the second housing portion 420 that is different from FIG. 5B.

For example, L1 is a graph for FIG. 5D in which the second housing portion 420 does not include the first ground unit 461-1 and the entire corresponding to the plurality of second side surface areas 423 is driven by the slot 460a-1.

For example, L2 is a graph for FIG. 5E in which the slot 460a-1 extends longer than the antenna element 450-1 on the second lower side surface 423c-1.

For example, L3 is a graph for FIG. 5F in which the slot 460a-1 extends from the second lower side surface 423c-1 to the fifth side surface 423b and extends longer than the antenna element 450-1.

For example, L4 is a graph showing the radiation efficiency of the electronic device 400-1 according to an embodiment including the second housing portion 420 as in FIG. 5B.

In FIG. 5C, with reference to an example target frequency band (e.g., 2.3 to 2.5 GHz - 1), it may be seen that the radiation efficiency of L4, in which the antenna element 450-1 and the slot 460a-1 are arranged to substantially face each other, is most excellent. In an embodiment of the disclosure, the first split unit 451-1, the second split unit 452-1, the first ground unit 461-1, and the second ground unit 462-1 are arranged so as to face each other, and thus, the electronic device 400-1 may provide the improved antenna radiation efficiency.

According to an embodiment of the disclosure, the second housing portion 420 may secure communication performance of the electronic device 400-1 through the slot 460a-1 and may also help lighten and/or slim down the electronic device 400-1.

For example, the second housing portion 420 may form the slot 460a-1 through the first ground unit 461-1 without a separate segmental structure. The segmental structure formed on the side surface may require a thickness greater than or equal to a predetermined value of the side surface area 423. According to an embodiment of the disclosure, the second housing portion 420 may provide communication performance of the electronic device 400-1 and may be advantageous for slimming and weight reduction by implementing the slot 460a-1 through the first ground unit 461-1, compared to the case including a segmental structure.

For example, since the slot 460a-1 is communicatively connected to the wireless communication circuit 443-1 of the first housing portion 410, a separate PCB and antenna module may not be required in the second housing portion 420. The electronic device 400-1 according to an embodiment of the disclosure may be advantageous for the weight reduction/slimming and may ensure manufacturing efficiency and economy.

In an embodiment, the plurality of second side surface areas 423 may be formed as a non-segmental structure. The electronic device 400-1 according to an embodiment of the disclosure may have a thinner thickness of the second housing portion 420 by including the slot 460a-1 without including the segmental structure in the second housing portion 420.

The electronic device 400-1 according to an embodiment of the disclosure may be advantageously applied in a case where one housing is formed thinner than another housing as a functional or design element of the electronic device 400-1.

In an embodiment, the first housing portion 410 and the second housing portion 420 may have different thicknesses. For example, as shown in FIGS. 3A to 3C, the second housing portion 420 may have a relatively thinner thickness than the first housing portion 410.

In an embodiment, since the first housing portion 410 is slidably driven, the first housing portion 410 may include elements such as the guide rail 438, the multi-bar 439, the first area 431, and the third area 433, and may be relatively thicker than the second housing portion 420.

In an embodiment of the disclosure, since the second housing portion 420 is formed in the non-segmental structure, the second housing portion 420 may be formed relatively thinner than when including a segmental structure, thereby ensuring the communication performance and helping to slim down and lighten the electronic device 400-1. Alternatively, the second housing portion 420 may be formed in the non-segmental structure, thereby providing rigidity.

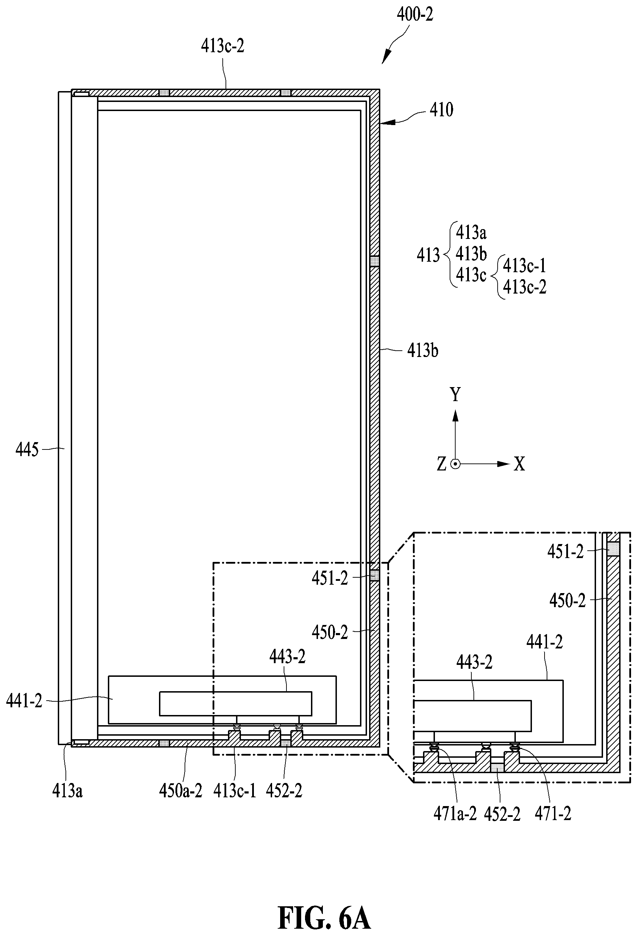

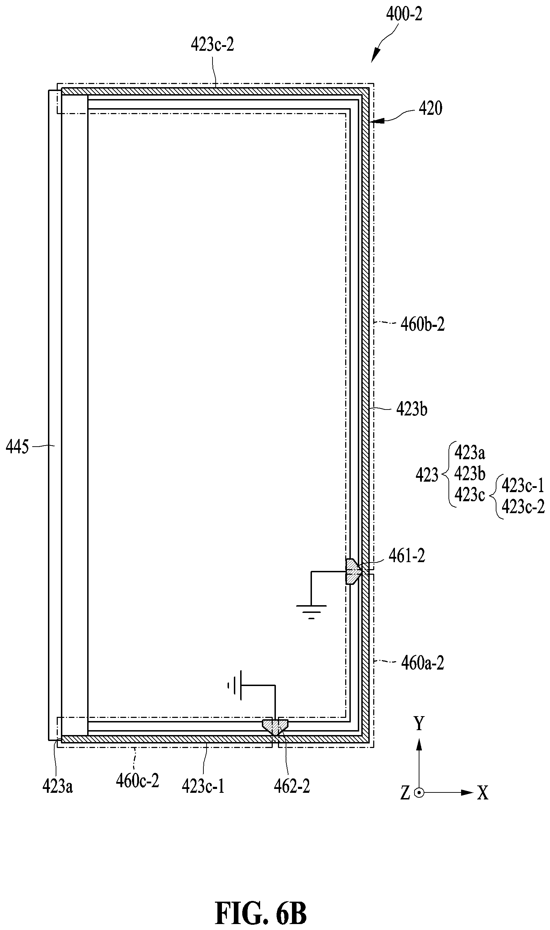

FIG. 6A is a plan view of the first housing portion 410 of an electronic device 400-2 according to an embodiment, and FIG. 6B is a plan view of the second housing portion 420 of the electronic device 400-2 according to an embodiment.

Referring to FIGS. 6A and 6B, the electronic device 400-2 according to an embodiment (e.g., the electronic device 101 of FIG. 1, the electronic device 300 of FIG. 2A and 2B, or the electronic device 400 of FIG. 3A to 4B) may include an antenna element 450-2 and a slot 460a-2.

Hereinafter, the description provided above is not repeated, and it is apparent that some components and structures of the electronic device 400-2 may be replaced, added, or omitted within a scope easily understandable by one of ordinary skill in the art with reference to the following drawings and descriptions. In addition, at least one component or feature of the embodiments described above may be coupled to the electronic device 400-2 unless this is technically and clearly infeasible.

In an embodiment, the plurality of first side surface areas 413 may include at least one split unit. For example, the at least one split unit may include at least one of a first split unit 451-2 and a second split unit 452-2. For example, a non-metal or non-conductive material may be disposed in the first split unit 451-2 and the second split unit 452-2.

In an embodiment, a partial area of the plurality of first side surface areas 413 between the first split unit 451-2 and the second split unit 452-2 may operate as an antenna radiator. In the following description, the partial area of the plurality of first side surface areas 413 between the first split unit 451-2 and the second split unit 452-2 that may operate as an antenna radiator will be described as the "antenna element 450-2." The antenna element 450-2 may be formed as a partial area of the plurality of first side surface areas 413. Alternatively, the antenna element 450-2 may be included a conductive portion between the first split unit 451-2 and the second split unit 452-2.

In an embodiment, the antenna element 450-2 may have a shape extending from the first split unit 451-2. Alternatively, the antenna element 450-2 may be provided between the first split unit 451-2 and the second split unit 452-2.

However, embodiments are not limited thereto, and the plurality of first side surface areas 413 may form the antenna element 450-2 with only one split unit (e.g., the first split unit 451-2). For example, one end portion of the antenna element 450-2 may face the first split unit 451-2, and the other end portion of the antenna element 450-2 may extend to an end portion of the first side surface area 413 (e.g., a contact point of the first side surface 413a and the second lower side surface 413c-1), so that the plurality of first side surface areas 413 may form one antenna element 450-2.

In an embodiment, a first power feeding unit 471-2 may be electrically connected to the antenna element 450-2. The antenna element 450-2 may be connected to a wireless communication circuit 443-2 (e.g., the antenna module 197 of FIG. 1) through the first power feeding unit 471-2.

In an embodiment, the wireless communication circuit 443-2 may be disposed inside the first housing portion 410 and, for example, on a first PCB 441-2. The wireless communication circuit 443-2 may transmit and receive a communication signal to and from the antenna element 450-2 and/or the slot 460a-2 through the first power feeding unit 471-2.

In an embodiment, the antenna element 450-2 may receive a communication signal from the outside or transmit a communication signal to the outside. The electronic device 400-2 may provide enhanced communication performance by utilizing at least a portion of the plurality of first side surface areas 413 of the first housing portion 410 as the antenna element 450-2.

In an embodiment, the plurality of second side surface areas 423 may be connected to at least one ground unit. For example, the at least one ground unit may include at least one of a first ground unit 461-2 and a second ground unit 462-2. The first ground unit 461-2 and the second ground unit 462-2 may be formed of a metal material or a conductive material. The first ground unit 461-2 and the second ground unit 462-2 may be connected to a ground inside the second housing portion 420.

In an embodiment, at least one slot 460a-2, 460b-2, 460c-2 may be formed in the plurality of second side surface areas 423 by the first ground unit 461-2 and/or the second ground unit 462-2. For example, the at least one slot 460a-2, 460b-2, 460c-2 may be surrounded by at least one ground unit (e.g., the first ground unit 461-2), a partial area of the second housing portion 420, and a ground provided inside the second housing portion 420.

In an embodiment, the at least one slot 460a-2, 460b-2, 460c-2 may include at least one of the first slot 460a-2, a second slot 460b-2, and a third slot 460c-2. For example, the first slot 460a-2 may be formed between the first ground unit 461-2 and the second ground unit 462-2. Alternatively, for example, the second slot 460b-2 may be formed between the first ground unit 461-2 and another ground point or an end portion of the second side surface area 423. Alternatively, for example, the third slot 460c-2 may be formed between the second ground unit 462-2 and another ground point or an end portion of the second side surface area 423.

In the following description, unless otherwise noted, the first slot 460a-2 formed between the first ground unit 461-2 and the second ground unit 462-2 is referred to as the "slot 460a-2", and the description of the "slot 460a-2" may be substantially applied to other slots 460b-2 and 460c-2.

In an embodiment, the slot 460a-2 may be formed between the first ground unit 461-2 and the second ground unit 462-2. The slot 460a-2 may have a shape extending from the first ground unit 461-2. For example, the slot 460a-2 may be provided between the first ground unit 461-2 and the second ground unit 462-2.

For example, the slot 460a-2 may be surrounded by at least one ground unit (e.g., the first ground unit 461-2), a partial area of the second housing portion 420, and a ground provided inside the second housing portion 420.

However, embodiments are not limited thereto, and the plurality of second side surface areas 423 may form the slot 460a-2 with only one ground unit (e.g., the first ground unit 461-2). For example, the first ground unit 461-2 of the slot 460a-2 may face the first split unit 451-2, and one end portion of the slot 460a-2 may be formed at a position corresponding to the second split unit 452-2.

In an embodiment, the slot 460a-2 may be formed to substantially correspond to the antenna element 450-2 in the folded state of the electronic device 400-2. For example, based on the folded state, the first split unit 451-2 and the first ground unit 461-2 may be formed at a position substantially facing each other, and the second split unit 452-2 and the second ground unit 462-2 may be formed at a position substantially facing each other.

In an embodiment, since the slot 460a-2 is positioned to substantially correspond to the antenna element 450-2, a separate power feeding unit connected to the slot 460a-2 may be omitted, and the slot 460a-2 may be coupled to the antenna element 450-2 and allow a current of the same phase as the antenna element 450-2 to flow, thereby operating as a slot antenna.

Here, the "position substantially facing each other" may refer to a position overlapped by each other based on the plan view of the electronic device 400-2. Alternatively, the "position substantially facing each other" may refer to a position where the antenna element 450-2 and the slot 460a-2 substantially overlap each other by the first split unit 451-2, the second split unit 452-2, the first ground unit 461-2, and the second ground unit 462-2.

However, the term "substantially" herein may be the same level reflecting a tolerance or an error in a general manufacturing process. Alternatively, the term "substantially" may be a range including any one range of +/-0.1%, +/-0.5%, +/-1%, +/-3%, +/-5%, +/-7%, +/-10%, +/-15%, and +/-20%, based on the literally same 0%.

In an embodiment, the first split unit 451-2 may be disposed on the second side surface 413b, and the second split unit 452-2 may be disposed on any one of the plurality of third side surfaces 413c-1 and 413c-2. For example, the second split unit 452-2 may be disposed on the first lower side surface 413c-1. The antenna element 450-2 may be disposed between the first split unit 451-2 and the second split unit 452-2, and, for example, may be disposed to extend from the second side surface 413b to the first lower side surface 413c-1.

In an embodiment, the first ground unit 461-2 may be disposed on the fifth side surface 423b, and the second ground unit 462-2 may be disposed on any one of the plurality of sixth side surfaces 423c-1 and 423c-2. For example, the second ground unit 462-2 may be disposed on the second lower side surface 423c-1. The slot 460a-2 may be disposed between the first ground unit 461-2 and the second ground unit 462-2, and, for example, may be disposed to extend from the fifth side surface 423b to the second lower side surface 423c-1.

In an embodiment, the slot 460a-2 may be formed adjacent to the fifth side surface 423b and the second lower side surface 423c-1. For example, the slot 460a-2 may be formed in a bracket (or a support member) positioned inside the second housing portion 420.

In an embodiment of the disclosure, the antenna element 450-2 and the slot 460a-2 may be formed from a surface on a right side (e.g., the +X direction) to a surface on a lower side (e.g., the -Y direction) (or a surface on an upper side (e.g., the +Y direction)) of the electronic device 400-2. For example, the electronic device 400-2 may have a major axis (e.g., the Y-axis direction) and a minor axis (e.g., the X-axis direction). A user may grip the electronic device 400-2 along the major axis of the electronic device 400-2. While the user directly grips the antenna element 450-2 and the slot 460a-2, there is a possibility that the communication performance of the antenna element 450-2 and the slot 460a-2 is degraded.

In an embodiment of the disclosure, the antenna element 450-2 and the slot 460a-2 are formed from a right side surface to a lower side surface. Accordingly, performance degradation caused by the user may be reduced or prevented, and the antenna element 450-2 and the slot 460a-2 may be advantageous for securing the antenna performance of the electronic device 400-2. In addition, the antenna element 450-2 and the slot 460a-2 are formed from the right side surface to the lower side surface, so that a length of the antenna element 450-2 and the slot 460a-2 may be increased, which is advantageous for securing the antenna performance of the electronic device 400-2.

In an embodiment, a current of substantially the same phase may flow through the slot 460a-2 and the antenna element 450-2 in the folded state of the electronic device 400-2. Since the current of the same phase flows through the slot 460a-2 and the antenna element 450-2, the electronic device 400-2 may provide improved antenna performance in the folded state.

For example, in the foldable and/or slidable electronic device 400-2, an overlap between metals acting as antenna radiators may occur by the driving of the first housing portion 410 and/or the second housing portion 420. If the metal overlap occurs, it may affect each other, thereby degrading radiation performance of the antenna.

In an embodiment of the disclosure, the electronic device 400-2 includes the slot 460a-2 of the second housing portion 420 that is disposed to correspond to a metal (e.g., the antenna element 450-2) of the first housing portion 410 in the folded state, thereby reducing or preventing the degradation of radiation performance even when the metals overlap.

In an embodiment of the disclosure, the antenna element 450-2 and the slot 460a-2 are arranged to substantially face each other, which may be advantageous for securing the antenna performance of the electronic device 400-2.

In an embodiment, the electronic device 400-2 may further include an additional antenna element 450a-2 and an additional power feeding unit 471a-2. The additional antenna element 450a-2 may have a shape that extends from the second split unit 452-2 in a direction different from that of the antenna element 450-2. For example, the additional antenna element 450a-2 may extend from the second split unit 452-2 at the first lower side surface 413c-1 in a direction opposite to the direction facing the first split unit 452-1.

In an embodiment, the second housing portion 420 may include a plurality of slots 460a-2, 460b-2, and 460c-2 formed by the first ground unit 461-2 and/or the second ground unit 462-2. Any one slot (e.g., the third slot 460c-2) of the plurality of slots 460a-2, 460b-2, and 460c-2 may be formed to substantially correspond to the additional antenna element 450a-2 in the folded state of the electronic device 400-2.

In an embodiment, the additional power feeding unit 471a-2 may be electrically connected to the additional antenna element 450a-2. The additional antenna element 450a-2 may be connected to the wireless communication circuit 443-2 through the additional power feeding unit 471a-2. The wireless communication circuit 443-2 may transmit and receive a communication signal to and from the additional antenna element 450a-2 and/or the slot 460c-2 through the additional power feeding unit 471a-2.

In an embodiment, the additional antenna element 450a-2 may receive a communication signal from the outside or transmit a communication signal to the outside. The electronic device 400-2 may provide enhanced communication performance by utilizing at least a portion of the plurality of first side surface areas 413 of the first housing portion 410 as the additional antenna element 450a-2.

In an embodiment, since the third slot 460c-2 is positioned to substantially correspond to the additional antenna element 450a-2, a separate power feeding unit connected to the slot 460c-2 may be omitted, and the third slot 460a-2 may be coupled to the additional antenna element 460c-2 and allow a current of the same phase as the additional antenna element 450c-2 to flow, thereby operating as a slot antenna.

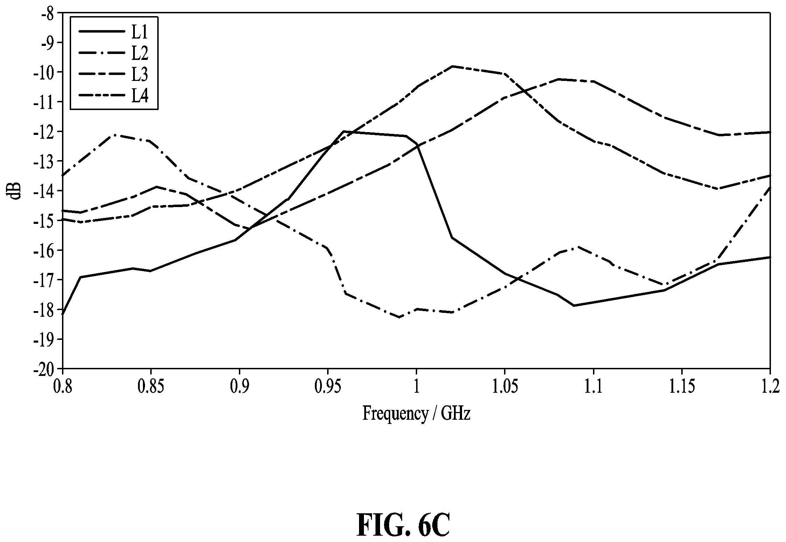

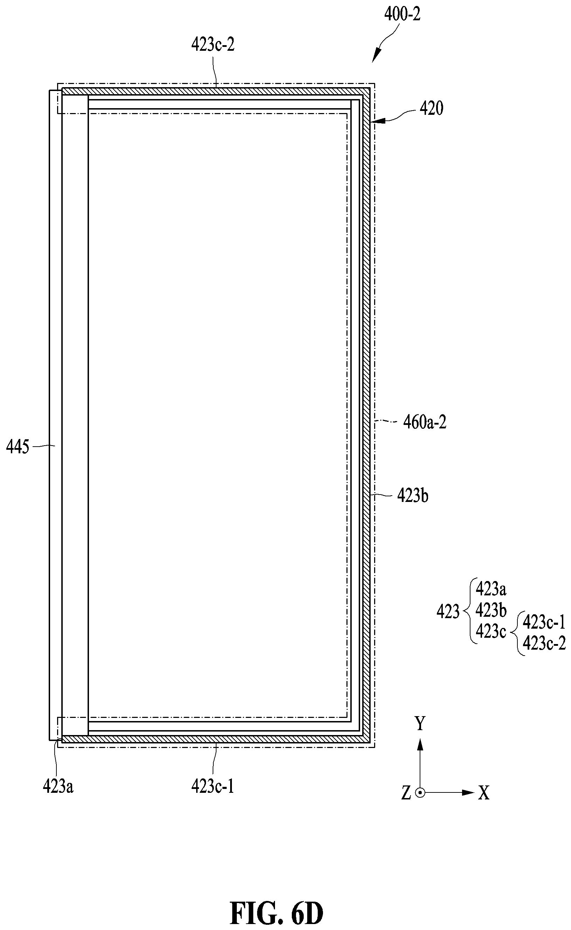

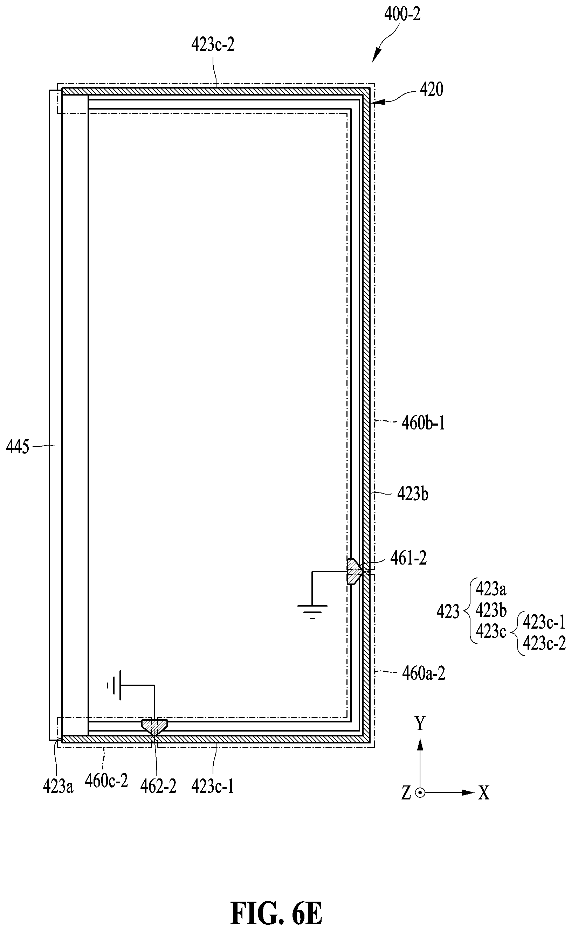

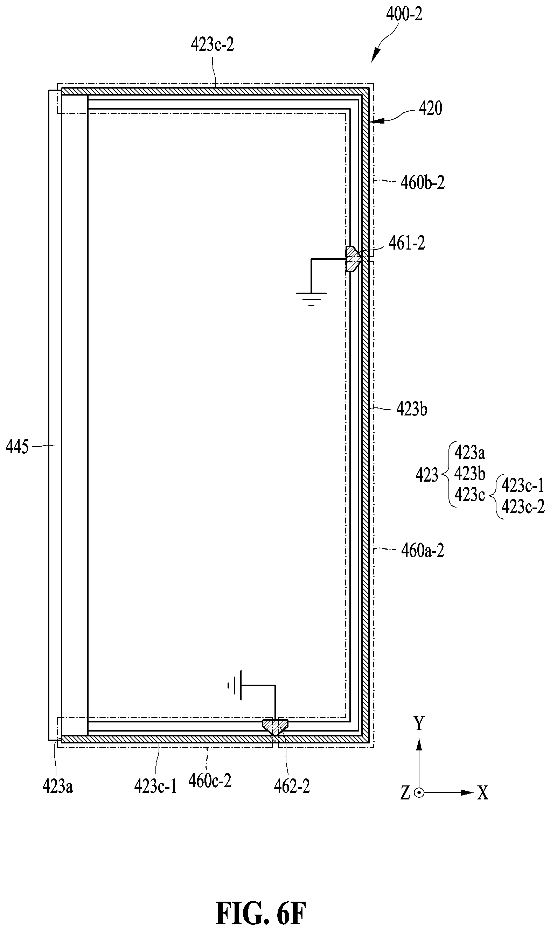

FIG. 6C is a graph of radiation efficiency depending on a frequency band of a plurality of embodiments, and FIGS. 6D, 6E, and 6F are plan views of the second housing portion 420 of an electronic device according to an embodiment.

Referring to FIG. 6C, each of L1, L2, and L3 is a graph showing the radiation efficiency of the electronic device 400-2 according to an embodiment including the first housing portion 410 as in FIG. 6A and including the second housing portion 420 that is different from FIG. 6B.

For example, L1 is a graph for FIG. 6D in which the second housing portion 420 does not include the first ground unit 461-2 and the entire corresponding to the plurality of second side surface areas 423 is driven by the slot 460a-2.

For example, L2 is a graph for FIG. 6E in which the slot 460a-2 extends longer than the antenna element 450-2 on the second lower side surface 423c-1.

For example, L3 is a graph for FIG. 6F in which the slot 460a-2 extends longer than the antenna element 450-2 on the fifth side surface 423b.

For example, L4 is a graph showing the radiation efficiency of the electronic device 400-2 according to an embodiment including the second housing portion 420 as in FIG. 6B.

In FIG. 6C, with reference to an example target frequency band (e.g., 0.95 to 1.05 GHz -2), it may be seen that the radiation efficiency of L4, in which the antenna element 450-2 and the slot 460a-2 are arranged to substantially face each other, is most excellent. In an embodiment of the disclosure, the first split unit 451-2, the second split unit 452-2, the first ground unit 461-2, and the second ground unit 462-2 are arranged so as to face each other, and thus, the electronic device 400-2 may provide the improved antenna radiation efficiency.

According to an embodiment of the disclosure, the second housing portion 420 may secure communication performance of the electronic device 400-2 through the slot 460a-2 and may also help lighten and/or slim down the electronic device 400-2.

For example, the second housing portion 420 may form the slot 460a-2 through the first ground unit 461-2 without a separate segmental structure. The segmental structure formed on the side surface may require a thickness greater than or equal to a predetermined value. According to an embodiment of the disclosure, the second housing portion 420 may provide communication performance of the electronic device 400-2 and may be advantageous for slimming and weight reduction by implementing the slot 460a-2 through the first ground unit 461-2, compared to the case including a segmental structure.

For example, since the slot 460a-2 is electromagnetically connected to the wireless communication circuit 443-2 of the first housing portion 410, at least some of the components for a separate PCB and antenna in the second housing portion 420 may be omitted. The electronic device 400-2 according to an embodiment of the disclosure may be advantageous for the weight reduction/slimming and may ensure manufacturing efficiency and economy.

In an embodiment, the plurality of second side surface areas 423 may be formed as a non-segmental structure. The electronic device 400-2 according to an embodiment of the disclosure may have a thinner thickness of the second housing portion 420 by including the slot 460a-2 without including the segmental structure in the second housing portion 420.

The electronic device 400-2 according to an embodiment of the disclosure may be advantageously applied in a case where one housing is formed thinner than another housing as a functional or design element of the electronic device 400-2.

In an embodiment, the first housing portion 410 and the second housing portion 420 may have different thicknesses. For example, as shown in FIGS. 3A to 3C, the second housing portion 420 may have a relatively thinner thickness than the first housing portion 410.

In an embodiment, since the first housing portion 410 is slidably driven, the first housing portion 410 may include elements such as the guide rail 438, the multi-bar 439, the first area 431, and the third area 433, and may be relatively thicker than the second housing portion 420.

In an embodiment of the disclosure, since the second housing portion 420 is formed in the non-segmental structure, the second housing portion 420 may be formed relatively thinner than when including a segmental structure, thereby ensuring the communication performance and helping to slim down and lighten the electronic device 400-2. Alternatively, the second housing portion 420 may be formed in the non-segmental structure, thereby providing rigidity.

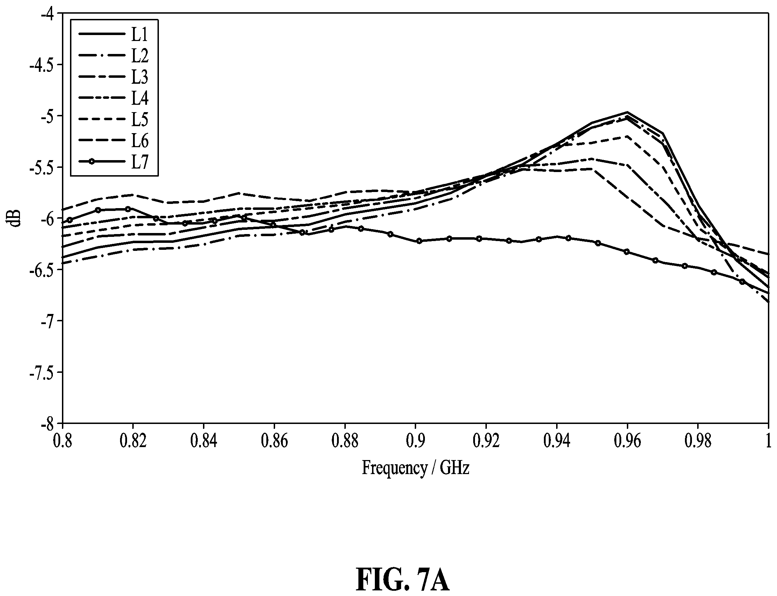

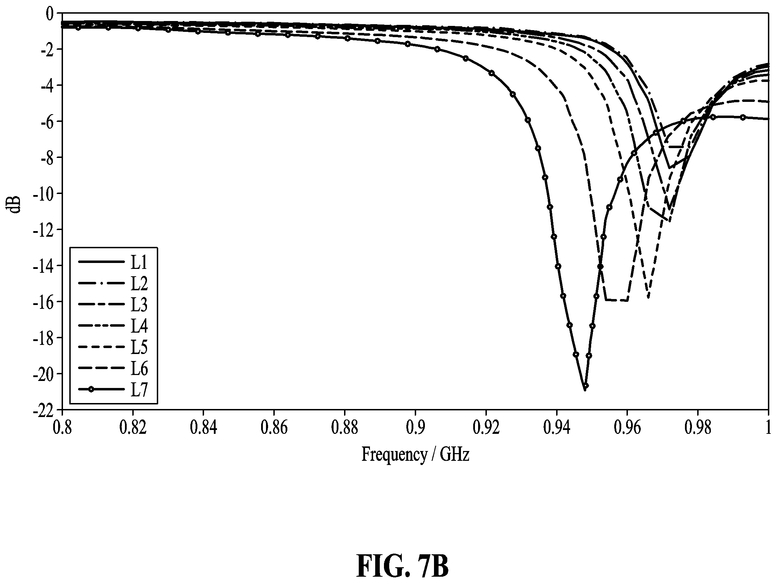

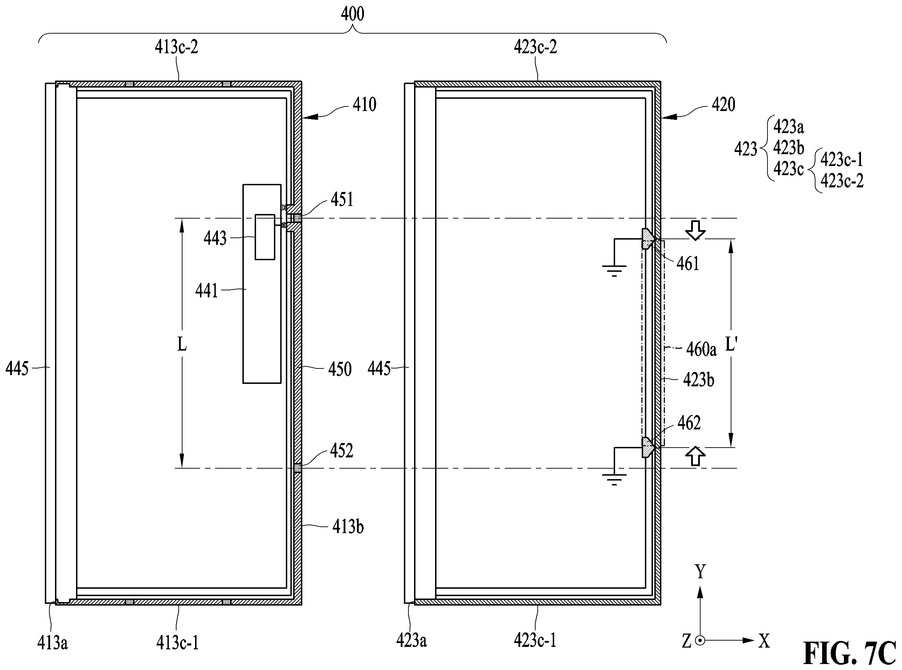

FIG. 7A is a graph of radiation efficiency depending on a frequency band of a plurality of embodiments, FIG. 7B is a graph of radiation efficiency depending on a frequency band of a plurality of embodiments, and FIG. 7C is a plan view of a state in which a first housing portion and a second housing portion of an electronic device are arranged separately according to an embodiment.

FIG. 7C is an example diagram in which, based on the electronic device 400 of FIGS. 4A and 4B, the first ground unit 461 and/or the second ground unit 462 are arranged in a direction that reduces a length L' of the slot 460a compared to a length L of the antenna element 450, and FIGS. 7A and 7B are graphs showing the radiation efficiency for this.

However, the results regarding the radiation efficiency of FIGS. 7A and 7B are not limited to the electronic device 400 of FIGS. 4A and 4B, and may be expected to be applied in the same or similar way to the electronic device 400 of FIGS. 5A and 5B or the electronic device 400 of FIGS. 6A and 6B.

In FIGS. 7A and 7B, L1 is a graph showing the radiation efficiency of the electronic device 400 according to an embodiment including the first housing portion 410 as in FIG. 4A and including the second housing portion 420 as in FIG. 4B so that the antenna element 450 and the slot 460a have substantially the same length. In addition, in FIGS. 7A and 7B, each of L2, L3, L4, L5, L6, and L7 is a graph showing the radiation efficiency of the electronic device 400 according to an embodiment including the first housing portion 410 as in FIG. 4A and including the second housing portion 420 that is different from FIG. 4B.

For example, in FIG. 7A, L2, L3, L4, L5, L6, and L7 respectively show embodiments showing states in which the first ground unit 461 moves in a direction that reduces the length L' of the slot 460a by 2.5 mm, 5 mm, 7.5 mm, 10 mm, 12.5 mm, and 15 mm from a position that substantially faces the first split unit 451.

For example, in FIG. 7B, L2, L3, L4, L5, L6, and L7 respectively show embodiments showing states in which the second ground unit 462 moves in a direction (e.g., the +Y direction of FIG. 4B) that reduces the slot 460a by 2.5 mm, 5 mm, 7.5 mm, 10 mm, 12.5 mm, and 15 mm from a position that substantially faces the second split unit 452.

In the plurality of embodiments of FIGS. 7A and 7B, a target frequency band of the electronic device 400 may be 0.95 to 1.05 GHz, a communication wavelength band may be between 300 mm and 330 mm, and a length of the antenna element 450 may be 75 mm.

Referring to FIGS. 7A and 7B, it may be seen that, through L1, the first split unit 451, the second split unit 452, the first ground unit 461, and the second ground unit 462 have most excellent radiation efficiency at a position substantially facing each other. In addition, through L7, it may be seen that the communication efficiency is reduced rapidly when the length of the slot 460a is reduced by more than or equal to a predetermined value compared to the antenna element 450.

For example, in the target frequency band, based on the embodiment having excellent radiation efficiency (e.g., L1), an embodiment having a difference in radiation efficiency within about 0.5 dB may be determined as a reduction threshold value of the length L' of the slot 460a, and the electronic device 400 may be seen as having substantially the same performance within the reduction threshold value. Therefore, in each of FIGS. 7A and 7B, the length reduction to L6 may be expected as a threshold value. Here, the length reduction range from L1 to L6 may be a length of 1/25 times the wavelength.

In an embodiment of the disclosure, through the appropriate arrangement of the first split unit 451, the second split unit 452, the first ground unit 461, and the second ground unit 462, the electronic device 400 may provide the improved antenna radiation efficiency.

Referring to FIGS. 7A and 7B, the length reduction of the slot 460a within 1/25 times the communication wavelength band of the electronic device 400 may be included in a range in which the slot 460a and the antenna element 450 according to an embodiment of the disclosure substantially face each other.

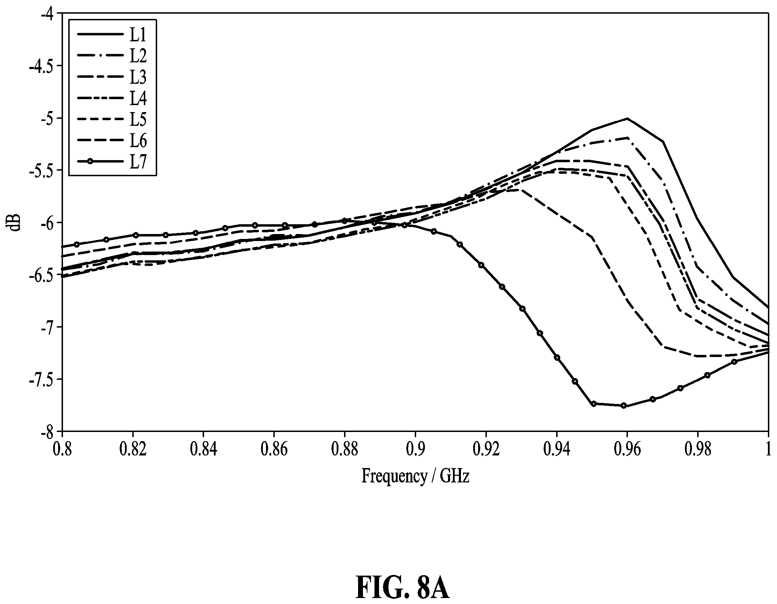

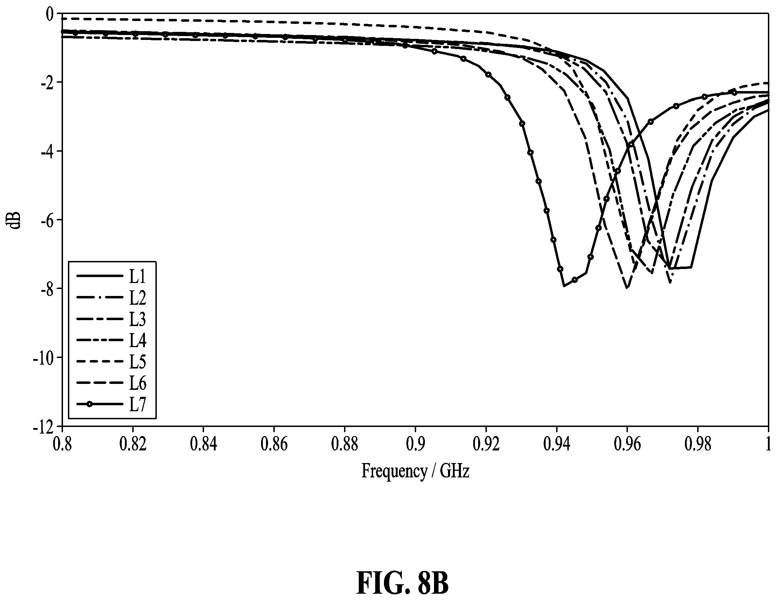

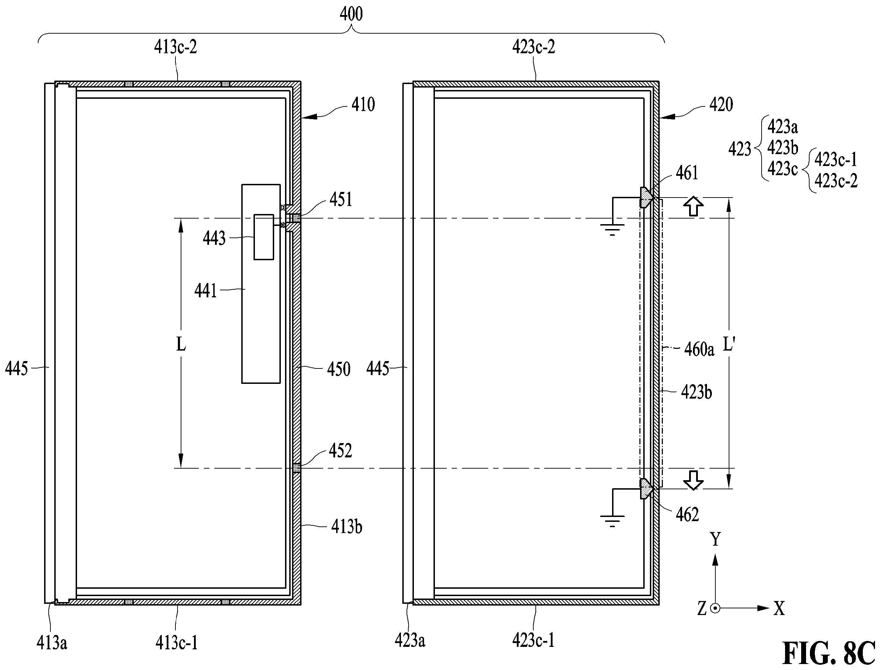

FIG. 8A is a graph of radiation efficiency depending on a frequency band of a plurality of embodiments, FIG. 8B is a graph of radiation efficiency depending on a frequency band of a plurality of embodiments, and FIG. 8C is a plan view of a state in which a first housing portion and a second housing portion of an electronic device are arranged separately according to an embodiment.

FIG. 8C is an example diagram in which, based on the electronic device 400 of FIGS. 4A and 4B, the first ground unit 461 and the second ground unit 462 are arranged in a direction that extends the length L' of the slot 460a compared to the length L of the antenna element 450, and FIGS. 8A and 8B are graphs showing the radiation efficiency for this.

However, the results regarding the radiation efficiency of FIGS. 8A and 8B are not limited to the electronic device 400 of FIGS. 4A and 4B, and may be expected to be applied in the same or similar way to the electronic device 400 of FIGS. 5A and 5B or the electronic device 400 of FIGS. 6A and 6B.

In FIGS. 8A and 8B, L1 is a graph showing the radiation efficiency of the electronic device 400 according to an embodiment including the first housing portion 410 as in FIG. 4A and including the second housing portion 420 as in FIG. 4B so that the antenna element 450 and the slot 460a have substantially the same length. In addition, in FIGS. 8A and 8B, each of L2, L3, L4, L5, L6, and L7 is a graph showing the radiation efficiency of the electronic device 400 according to an embodiment including the first housing portion 410 as in FIG. 4A and including the second housing portion 420 that is different from FIG. 4B.

For example, in FIG. 8A, L2, L3, L4, L5, L6, and L7 respectively show embodiments showing states in which the first ground unit 461 moves in a direction (e.g., the +Y direction) that extends the length L' of the slot 460a by 2.5 mm, 5 mm, 7.5 mm, 10 mm, 12.5 mm, and 15 mm from a position that substantially faces the first split unit 451.

For example, in FIG. 8B, L2, L3, L4, L5, L6, and L7 respectively show embodiments showing states in which the second ground unit 462 moves in a direction (e.g., the -Y direction) that extends the length L' of the slot 460a by 2.5 mm, 5 mm, 7.5 mm, 10 mm, 12.5 mm, and 15 mm from a position that substantially faces the second split unit 452.

In the plurality of embodiments of FIGS. 8A and 8B, a target frequency band of the electronic device 400 may be 0.95 to 1.05 GHz, a communication wavelength band may be between about 300 mm and 330 mm, and a length of the antenna element 450 may be about 75 mm.

Referring to FIGS. 8A and 8B, it may be seen that, through L1, the first split unit 451, the second split unit 452, the first ground unit 461, and the second ground unit 462 have most excellent radiation efficiency at a position substantially facing each other. In addition, through L7, it may be seen that the communication efficiency is reduced rapidly when the length of the slot 460a extends by more than or equal to a predetermined value compared to the antenna element 450.

For example, in the target frequency band, based on the various embodiments having excellent radiation efficiency (e.g., L1), an embodiment having a difference in radiation efficiency within about 0.5 dB may be determined as an extension threshold value of the length L' of the slot 460a, and the electronic device 400 may be seen as having substantially the same performance within the extension threshold value. Therefore, in each of FIGS. 8A and 8B, the length extension to L6 may be expected as a threshold value. Here, the length extension range from L1 to L6 may be a length of 1/30 times the wavelength.

In an embodiment of the disclosure, through the appropriate arrangement of the first split unit 451, the second split unit 452, the first ground unit 461, and the second ground unit 462, the electronic device 400 may provide the improved antenna radiation efficiency.

Referring to FIGS. 8A and 8B, the length extension of the slot 460a within 1/30 times the communication wavelength band of the electronic device 400 may be included in a range in which the slot 460a and the antenna element 450 according to an embodiment of the disclosure substantially face each other.

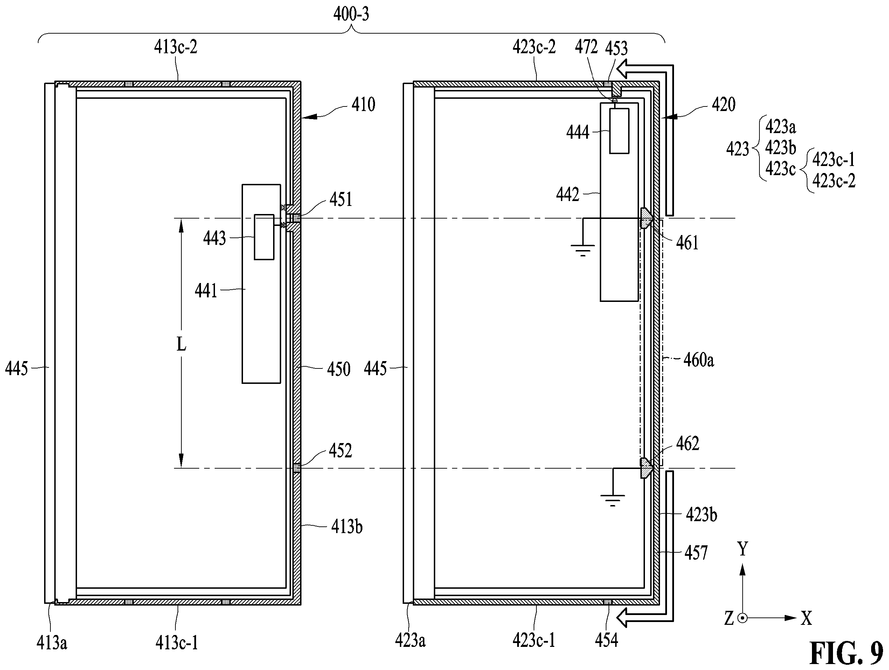

FIG. 9 is a plan view of a state in which the first housing portion 410 and the second housing portion 420 of an electronic device 400-3 are arranged separately according to an embodiment.

Referring to FIG. 9, the second housing portion 420 of the electronic device 400-3 (e.g., the electronic device 101 of FIG. 1, the electronic device 300 of FIGS. 2A and 2B, or the electronic device 400 of FIGS. 3A to 4B) may further include at least one of at least one split unit 453, 454, a second PCB 442, a wireless communication circuit 444, and a second power feeding unit 472.

In an embodiment, the electronic device 400-3 may include a first housing portion (e.g., the first housing portion 410 of FIG. 4A). Additionally, FIG. 9 is provided to illustrate the components of the second housing portion 420 based on the electronic device 400-3 including the first ground unit 461 and the second ground unit 462 of FIG. 4B, and the description of FIG. 9 may be applied in the same or similar way to not only the electronic device 400 of FIGS. 4A and 4B, but also the electronic device 400-1 of FIGS. 5A and 5B or the electronic device 400-2 of FIGS. 6A and 6B.

Hereinafter, the description provided above is not repeated, and it is apparent that some components and structures of the electronic device 400-3 may be replaced, added, or omitted within a scope easily understandable by one of ordinary skill in the art with reference to the following drawings and descriptions. In addition, at least one component or feature of the embodiments described above may be coupled to the electronic device 400-3 unless this is technically and clearly infeasible.

In an embodiment, the second housing portion 420 may further include the at least one split unit 453, 454. The at least one split unit 453, 454 may include at least one of a third split unit 453 and a fourth split unit 454.

In an embodiment of the disclosure, the second housing portion 420 may include the split unit 453, 454 separate from the first housing portion 410 to implement an antenna including an antenna element 457, and the electronic device 400-3 may include more antennas.

In an embodiment, the third split unit 453 and the fourth split unit 454 may be arranged so as not to be aligned with the first split unit 451 and the second split unit 452. For example, based on the length L of the antenna element 450 provided between the first split unit 451 and the second split unit 452, the third split unit 453 and the fourth split unit 454 may be spaced apart at a greater interval than the length L of the antenna element 450.

In an embodiment, the third split unit 453 and the fourth split unit 454 may be disposed on the plurality of sixth side surfaces 423c-1 and 423c-2, respectively. For example, the third split unit 453 may be disposed on the second upper side surface 423c-2, and the fourth split unit 454 may be disposed on the second lower side surface 423c-1.

In an embodiment, the electronic device 400-3 may form various power feeding units in the second housing portion 420 including the third split unit 453 and the fourth split unit 454, and thus, the electronic device 400-3 may form an antenna that may be driven in various ways.

For example, the electronic device 400-3 may form the second power feeding unit 472 to additionally form an antenna that forms a closed loop from the third split unit 453 to the first ground unit 461.

For example, the electronic device 400-3 may implement separate additional power feeding to additionally implement an antenna that forms a closed loop from the fourth split unit 454 to the second ground unit 462.

For example, the electronic device 400-3 may also form the separate additional power feeding in the additional antenna element 457, so that the additional antenna element 457 may operate as an additional antenna radiator.

In an embodiment of the disclosure, since the third split unit 453 and the fourth split unit 454 are formed on the upper and lower sides, respectively, of the second housing portion 420, additional antenna radiators of the second housing portion 420 may be variously formed, which may be advantageous for securing the antenna performance of the electronic device 400-3.

In an embodiment, the second power feeding unit 472 may be electrically connected to the additional antenna element 457. The additional antenna element 457 may be connected to the wireless communication circuit 444 (e.g., the antenna module 197 of FIG. 1) through the second power feeding unit 472.

In an embodiment, the wireless communication circuit 444 may be disposed inside the second housing portion 420 and, for example, on the second PCB 442. The wireless communication circuit 444 may transmit and receive a communication signal to and from the additional antenna element 457 through the second power feeding unit 472.

In an embodiment, the electronic device 400-3 may include at least one switching element. The at least one switching element may control the electrical connection of at least one of a plurality of antenna modules (e.g., the wireless communication circuit 443 and the wireless communication circuit 444) of the electronic device 400-3 and at least one of a plurality of antenna elements (e.g., the antenna element 457, the slot 460a, and the additional antenna element 457). The electronic device 400-3 may control the at least one switching element based on environmental factors such as a communication environment, a usage status, and a communication band.

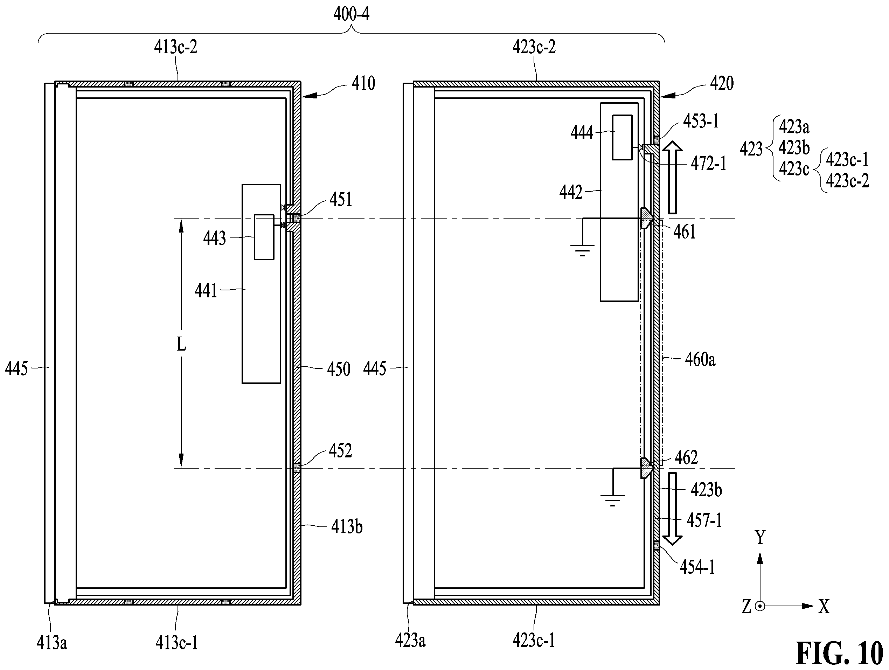

FIG. 10 is a plan view of a state in which the first housing portion 410 and the second housing portion 420 of an electronic device 400-4 are arranged separately according to an embodiment.

Referring to FIG. 10, the second housing portion 420 of the electronic device 400-4 (e.g., the electronic device 101 of FIG. 1, the electronic device 300 of FIGS. 2A and 2B, or the electronic device 400 of FIGS. 3A to 4B) may further include at least one of at least one split unit 453-1, 454-1, the second PCB 442, the wireless communication circuit 444, and a second power feeding unit 472-1.

In an embodiment, the electronic device 400-4 may include a first housing portion (e.g., the first housing portion 410 of FIG. 4A). FIG. 10 is provided to illustrate the components of the second housing portion 420 based on the electronic device 400-4 including the first ground unit 461 and the second ground unit 462 of FIG. 4B, and the description of FIG. 10 may be applied in the same or similar way to not only the electronic device 400 of FIGS. 4A and 4B, but also the electronic device 400-1 of FIGS. 5A and 5B or the electronic device 400-2 of FIGS. 6A and 6B.

Hereinafter, the description provided above is not repeated, and it is apparent that some components and structures of the electronic device 400-4 may be replaced, added, or omitted within a scope easily understandable by one of ordinary skill in the art with reference to the following drawings and descriptions. In addition, at least one component or feature of the embodiments described above may be coupled to the electronic device 400-4 unless this is technically and clearly infeasible.

In an embodiment, the second housing portion 420 may further include the at least one split unit 453-1, 454-1. The at least one split unit 453-1, 454-1 may include at least one of a third split unit 453-1 and a fourth split unit 454-1.

In an embodiment of the disclosure, the second housing portion 420 includes a split unit separate from the first housing portion 410 so that an additional antenna element 457-1 may be formed separately from the slot 460a, and the electronic device 400-4 may provide improved communication efficiency.

In an embodiment, the third split unit 453-1 and the fourth split unit 454-1 may be arranged so as not to be aligned with the first split unit 451 and the second split unit 452. For example, based on the length L of the antenna element 450 provided between the first split unit 451 and the second split unit 452, the third split unit 453-1 and the fourth split unit 454-1 may be spaced apart at a greater interval than the length L of the antenna element 450.

In an embodiment, the third split unit 453-1 and the fourth split unit 454-1 may be respectively disposed on both sides of the slot 460a on the fifth side surface 423b. For example, the third split unit 453-1 may be disposed adjacent to the first ground unit 461, and the fourth split unit 454-1 may be disposed adjacent to the second ground unit 462.

In an embodiment, the electronic device 400-4 may form various power feeding units in the second housing portion 420 including the third split unit 453-1 and the fourth split unit 454-1, and thus, the electronic device 400-4 may form an antenna that may be driven in various ways.

For example, the electronic device 400-4 may form the second power feeding unit 472-1 to additionally implement an antenna that forms a closed loop from the third split unit 453-1 to the first ground unit 461.

For example, the electronic device 400-4 may implement separate additional power feeding to additionally implement an antenna that forms a closed loop from the fourth split unit 454-1 to the second ground unit 462.

For example, the electronic device 400-4 may also form the separate additional power feeding in the additional antenna element 457-1, so that the additional antenna element 457-1 may operate as an additional antenna radiator.

In an embodiment of the disclosure, the third split unit 453-1 and the fourth split unit 454-1 are formed respectively on the upper side of the first ground unit 461 and the lower side of the second ground unit 462 of the second housing portion 420, so that the length of the additional antenna element 457-1 of the second housing portion 420 may be increased, which is advantageous for securing the antenna performance of the electronic device 400-4.

In an embodiment, the second power feeding unit 472-1 may be electrically connected to the additional antenna element 457-1. The additional antenna element 457-1 may be connected to the wireless communication circuit 444 (e.g., the antenna module 197 of FIG. 1) through the second power feeding unit 472-1.

In an embodiment, the wireless communication circuit 444 may be disposed inside the second housing portion 420 and, for example, on the second PCB 442. The wireless communication circuit 444 may transmit and receive a communication signal to and from the additional antenna element 457-1 through the second power feeding unit 472-1.

In an embodiment, the electronic device 400-4 may include at least one switching element. The at least one switching element may control the electrical connection of at least one of a plurality of antenna modules (e.g., the wireless communication circuit 443 and the wireless communication circuit 444) of the electronic device 400-4 and at least one of a plurality of antenna elements (e.g., the antenna element 457, the slot 460a, and the additional antenna element 457-1). The electronic device 400-4 may control the at least one switching element based on environmental factors such as a communication environment, a usage status, and a communication band.

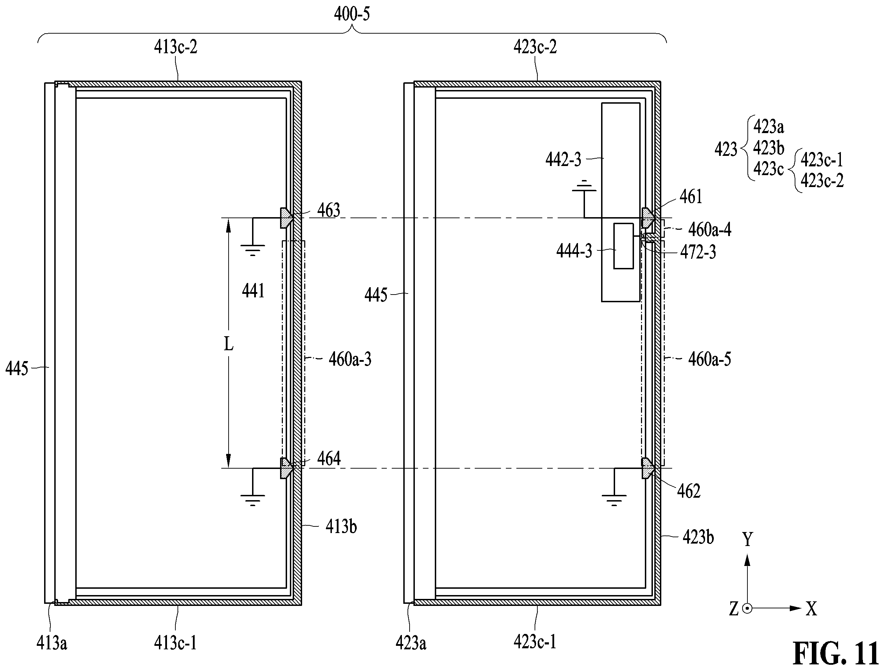

FIG. 11 is a plan view of a state in which the first housing portion 410 and the second housing portion 420 of an electronic device 400-5 are arranged separately according to an embodiment.

Referring to FIG. 11, the electronic device 400-5 according to an embodiment (e.g., the electronic device 101 of FIG. 1, the electronic device 300 of FIGS. 2A and 2B, or the electronic device 400 of FIGS. 3A to 4B) may include a plurality of slots 460a and 460a-3.

Hereinafter, the description provided above is not repeated, and it is apparent that some components and structures of the electronic device 400-5 may be replaced, added, or omitted within a scope easily understandable by one of ordinary skill in the art with reference to the following drawings and descriptions. In addition, at least one component or feature of the embodiments described above may be coupled to the electronic device 400-5 unless this is technically and clearly infeasible.

In an embodiment, the plurality of second side surface areas 423 may include at least one ground unit. The at least one ground unit may include at least one of the first ground unit 461 and the second ground unit 462. The first ground unit 461 and the second ground unit 462 may be formed of a metal material or a conductive material. The first ground unit 461 and the second ground unit 462 may be connected to a ground inside the second housing portion 420.

In an embodiment, at least one slot 460a-4, 460a-5 may be formed between the first ground unit 461 and the second ground unit 462. The at least one slot 460a-4, 460a-5 may have a shape extending from the first ground unit 461. Alternatively, the at least one slot 460a-4, 460a-5 may be provided between the first ground unit 461 and the second ground unit 462.

In an embodiment, the at least one slot 460a-4, 460a-5 may be formed on both sides based on a power feeding unit 472-3. For example, a first slot area 460a-4 may be provided between the first ground unit 461 and the power feeding unit 472-3, and a second slot area 460a-5 may be provided between the second ground unit 462 and the power feeding unit 472-3.

For example, the first slot area 460a-4 and the second slot area 460a-5 may form one slot 460a-4, 460a-5.

In the following description, the first slot area 460a-4 and the second slot area 460a-5 formed between the first ground unit 461 and the second ground unit 462 are referred to as the "slot 460a-4, 460a-5." For example, the slot 460a-4, 460a-5 may have a shape corresponding to an additional slot 460a-3 to be described later, and may be disposed to correspond to the additional slot 460a-3.

In an embodiment, the plurality of first side surface areas 413 may include at least one ground unit 463, 464. The at least one ground unit 463, 464 may include at least one of a third ground unit 463 and a fourth ground unit 464. The third ground unit 463 and the fourth ground unit 464 may be formed of a metal material or a conductive material.

In an embodiment, the additional slot 460a-3 may be formed between the third ground unit 463 and the fourth ground unit 464. The additional slot 460a-3 may have a shape extending from the third ground unit 463. Alternatively, the additional slot 460a-3 may be provided between the third ground unit 463 and the fourth ground unit 464.

However, the disclosure is not limited thereto, and the plurality of first side surface areas 413 may form the additional slot 460a-3 with only one ground unit (e.g., the third ground unit 463). For example, one end portion of the additional slot 460a-3 may face the third ground unit 463, and the other end portion of the additional slot 460a-3 may be disposed on an end portion of the first side surface area 413, so that the plurality of first side surface areas 413 may form one additional slot 460a-3.

In an embodiment, the slot 460a-4, 460a-5 and the additional slot 460a-3 may be arranged to substantially face each other in the folded state of the electronic device 400-5. In an embodiment, the slot 460a-4, 460a-5 and the additional slot 460a-3 may have substantially the same length L.

For example, based on the folded state, the first ground unit 461 and the third ground unit 463 may be formed at a position substantially facing each other, and the second ground unit 462 and the fourth ground unit 464 may be formed at a position substantially facing each other. Here, the "position substantially facing each other" may refer to a position overlapped by each other based on the plan view of the electronic device 400-5. Alternatively, the "position substantially facing each other" may refer to a position where the antenna element 450 and the slot 460a-4, 460a-5 substantially overlap each other by the first ground unit 461, the second ground unit 462, the third ground unit 463, and the fourth ground unit 464.

However, the term "substantially" herein may be the same level reflecting a tolerance or an error in a general manufacturing process. Alternatively, the term "substantially" may be a range including any one range of +/-0.1%, +/-0.5%, +/-1%, +/-3%, +/-5%, +/-7%, +/-10%, +/-15%, and +/-20%, based on the literally same 0%.

In an embodiment, an antenna module 444-3 may be disposed inside the second housing portion 420 and, for example, on a PCB 442-3. The antenna module 444-3 may transmit and receive a communication signal to and from the slot 460a-4, 460a-5 and/or the additional slot 460a-3 through the power feeding unit 472-3.

In an embodiment, a current of substantially the same phase may flow through the slot 460a-4, 460a-5 and the additional slot 460a-3 in the folded state of the electronic device 400-5. Since the current of the same phase flows through the slot 460a-4, 460a-5 and the additional slot 460a-3, the electronic device 400-5 may provide improved antenna performance in the folded state.

For example, in the foldable and/or slidable electronic device 400-5, an overlap between metals acting as an antenna array may occur by the driving of the first housing portion 410 and/or the second housing portion 420. If the metal overlap occurs, it may affect each other, thereby degrading radiation performance of the antenna.

In an embodiment of the disclosure, the electronic device 400-5 may align a metal (e.g., the additional slot 460a-3) of the first housing portion 410 and a metal (e.g., the slot 460a-4, 460a-5) of the second housing portion 420 in the folded state, thereby reducing and preventing the degradation of radiation performance even when the metals overlap.

According to an embodiment of the disclosure, the second housing portion 420 may secure the communication performance of the electronic device 400-5 through the slot 460a and the additional slot 460a-3 and may also help lighten and/or slim down the electronic device 400-5.

For example, the first housing portion 410 and the second housing portion 420 may form the slot 460a and the additional slot 460a-3 without a separate segmental structure. The segmental structure formed on the side surface may require a thickness greater than or equal to a predetermined value of the first housing portion 410 and the second housing portion 420. According to an embodiment of the disclosure, the first housing portion 410 and the second housing portion 420 may provide the communication performance of the electronic device 400-5 and may be advantageous for slimming and weight reduction by implementing the slot 460a and the additional slot 460a-3, compared to the case including a segmental structure.

In an embodiment, the plurality of first side surface areas 413 and the plurality of second side surface areas 423 may be formed as a non-segmental structure. The electronic device 400-5 according to an embodiment of the disclosure may have a thinner thickness of the electronic device 400-5 by including the slot 460a and the additional slot 460a-3 without including the segmental structure in the first housing portion 410 and the second housing portion 420.

An electronic device 400, 400-1, 400-2, 400-3, 400-4 according to an embodiment may include a first housing portion 410 including a first surface 411, a second surface 412 opposite to the first surface 411, and a plurality of first side surface areas 413 connected from the first surface 411 to the second surface 412, a second housing portion 420 including a third surface 421, a fourth surface 422 opposite to the third surface 421, and a plurality of second side surface areas 423 connected from the third surface 421 to the fourth surface 422, and a hinge unit 445 connecting the first housing portion 410 and the second housing portion 420, and configured to operate between a folded state in which the first surface 411 and the third surface 421 face each other and an unfolded state in which the first surface 411 and the third surface 421 do not face each other. In an embodiment, the plurality of first side surface areas 413 may include a first split unit 451, 451-1, 451-2 and an antenna element 450, 450-1, 450-2 in a shape extending from the first split unit 451, 451-1, 451-2. In an embodiment, the plurality of second side surface areas 423 may include a first ground unit 461, 461-1, 461-2 and a slot 460a, 460a-1, 460a-2 in a shape extending from the first ground unit 461, 461-1, 461-2. In an embodiment, the slot 460a, 460a-1, 460a-2 may be disposed to substantially face the antenna element 450, 450-1, 450-2 in the folded state, such that currents of the same phase flow in the slot 460a, 460a-1, 460a-2 and the antenna element 450, 450-1, 450-2.

In an embodiment, the electronic device 400, 400-1, 400-2, 400-3, 400-4 may further include a first power feeding unit 471 electrically connected to the antenna element 450, 450-1, 450-2, and a wireless communication circuit 443 disposed in the first housing portion 410 and configured to transmit and receive a communication signal to and from the antenna element 450, 450-1, 450-2 and the slot 460a, 460a-1, 460a-2 through the first power feeding unit 471.

In an embodiment, the plurality of first side surface areas 413 may further include a second split unit 452, 452-1, 452-2. In an embodiment, the antenna element 450, 450-1, 450-2 may be provided between the first split unit 451, 451-1, 451-2 and the second split unit 452, 452-1, 452-2.

In an embodiment, the plurality of second side surface areas 423 may include a second ground unit 462, 462-1, 462-2. In an embodiment, the slot 460a, 460a-1, 460a-2 may be provided between the first ground unit 461, 461-1, 461-2 and the second ground unit 462, 462-1, 462-2.

In an embodiment, in the folded state, the first ground unit 461, 461-1, 461-2 may substantially face the first split unit 451, 451-1, 451-2, and the second ground unit 462, 462-1, 462-2 may substantially face the second split unit 452, 452-1, 452-2.

In an embodiment, the plurality of first side surface areas 413 may include a first side surface 413a on which the hinge unit 445 is disposed, a second side surface 413b facing the first side surface 413a, and a plurality of third side surfaces 413c-1, 413c-2 connected from the first side surface 413a to the second side surface 413b.

In an embodiment, the first split unit 451-1 and the second split unit 452-1 may be disposed on any one of the plurality of third side surfaces 413c-1, 413c-2.

In an embodiment, the first split unit 451-2 may be disposed on the second side surface 413b. In an embodiment, the second split unit 452-2 may be disposed on any one of the plurality of third side surfaces 413c-1, 413c-2.

In an embodiment, the first split unit 451 and the second split unit 452 may be disposed on the second side surface 413b.

In an embodiment, the plurality of second side surface areas 423 may include a fourth side surface 423a on which the hinge unit 445 is disposed, a fifth side surface 423b facing the fourth side surface 423a, and a plurality of sixth side surfaces 423c-1, 423c-2 connected from the fourth side surface 423a to the fifth side surface 423b. In an embodiment, the plurality of second side surface areas 423 may further include a third split unit 453 and a fourth split unit 454 disposed on the plurality of sixth side surfaces 423c-1, 423c-2, respectively.

In an embodiment, the plurality of second side surface areas 423 may include a fourth side surface 423a on which the hinge unit 445 is disposed, a fifth side surface 423b facing the fourth side surface 423a, and a plurality of sixth side surfaces 423c-1, 423c-2 connected from the fourth side surface 423a to the fifth side surface 423b. In an embodiment, the plurality of second side surface areas 423 may further include a third split unit 453-1 and a fourth split unit 454-1 disposed at both sides of the slot 460a on the fifth side surface 423b, respectively, in the folded state.

In an embodiment, the plurality of second side surface areas 423 may be formed of a non-segmental structure.

In an embodiment, the second housing portion 420 may be thinner than the first housing portion 410.

In an embodiment, the electronic device 400-3, 400-4 may further include a second power feeding unit 472 electrically connected to the slot 460a, and a wireless communication circuit 444 disposed in the second housing portion 420 and configured to transmit and receive a communication signal to and from the slot 460a through the second power feeding unit 472.

Additionally, the electronic device 400, 400-1, 400-2, 400-3, 400-4 according to an embodiment may include a first housing portion 410 including a plurality of first side surface areas 413, and a second housing portion 420 including a plurality of second side surface areas 423 and movable relative to the first housing portion 410. In an embodiment, the plurality of first side surface areas 413 may include a first split unit 451, 451-1, 451-2, a second split unit 452, 452-1, 452-2, and an antenna element 450, 450-1, 450-2 provided between the first split unit 451, 451-1, 451-2 and the second split unit 452, 452-1, 452-2. In an embodiment, the plurality of second side surface areas 423 may include a first ground unit 461, 461-1, 461-2, a second ground unit 462, 462-1, 462-2, and a slot 460a, 460a-1, 460a-2 provided between the first split unit 451, 451-1, 451-2 and the second split unit 452, 452-1, 452-2. In an embodiment, the slot 460a, 460a-1, 460a-2 may be disposed to substantially face the antenna element 450, 450-1, 450-2 in a state in which the first housing portion 410 and the second housing portion 420 face each other, such that currents of the same phase flow in the slot 460a, 460a-1, 460a-2 and the antenna element 450, 450-1, 450-2.

In an embodiment, the electronic device 400, 400-1, 400-2, 400-3, 400-4 may further include a first power feeding unit 471 electrically connected to the antenna element 450, 450-1, 450-2, a wireless communication circuit 443 disposed in the first housing portion 410 and configured to transmit and receive a communication signal to and from the antenna element 450, 450-1, 450-2 and the slot 460a, 460a-1, 460a-2 through the first power feeding unit 471.

In an embodiment, the plurality of second side surface areas 423 may be formed of a non-segmental structure.

In an embodiment, the second housing portion 420 may be thinner than the first housing portion 410.

In an embodiment, the electronic device 400-3, 400-4 may further include a second power feeding unit 472 electrically connected to the slot 460a, and a wireless communication circuit 444 disposed in the second housing portion 420 and configured to transmit and receive a communication signal to and from the slot 460a through the second power feeding unit 472.

While embodiments have been illustrated and described above, the disclosure is not limited to the aforementioned specific embodiments. Those skilled in the art should appreciate that various modifications may be made to the embodiments without departing from the subject matter of the disclosure as defined by the appended claims, and also that such modifications are not to be understood individually from the technical spirit or prospect of the disclosure.

## Claims

1. An electronic device (400, 400-1, 400-2, 400-3, 400-4) comprising:
a first housing portion (410) comprising a first surface (411), a second surface (412) opposite to the first surface (411), and a plurality of first side surface areas (413) connecting the first surface (411) to the second surface (412);
a second housing portion (420) comprising a third surface (421), a fourth surface (422) opposite to the third surface (421), and a plurality of second side surface areas (423) connecting the third surface (421) to the fourth surface (422); and
a hinge unit (445) connecting the first housing portion (410) and the second housing portion (420), and configured to operate between a folded state in which the first surface (411) and the third surface (421) face each other and an unfolded state in which the first surface (411) and the third surface (421) do not face each other,
wherein the plurality of first side surface areas (413) comprises a first split unit (451, 451-1, 451-2) and an antenna element (450, 450-1, 450-2) in a shape extending from the first split unit (451, 451-1, 451-2),
the plurality of second side surface areas (423) comprises a first ground unit (461, 461-1, 461-2) and a slot (460a, 460a-1, 460a-2) in a shape extending from the first ground unit (461, 461-1, 461-2), and
the slot (460a, 460a-1, 460a-2) is disposed to substantially face the antenna element (450, 450-1, 450-2) in the folded state, such that currents of the same phase flow in the slot (460a, 460a-1, 460a-2) and the antenna element (450, 450-1, 450-2).

2. The electronic device (400, 400-1, 400-2, 400-3, 400-4) of claim 1, further comprising:
a first power feeding unit (471) electrically connected to the antenna element (450, 450-1, 450-2); and
a wireless communication circuit (443) disposed in the first housing portion (410) and configured to transmit and receive a communication signal to and from the antenna element (450, 450-1, 450-2) and the slot (460a, 460a-1, 460a-2) through the first power feeding unit (471).

3. The electronic device (400, 400-1, 400-2, 400-3, 400-4) of claim 1 or 2, wherein
the plurality of first side surface areas (413) further comprises a second split unit (452, 452-1, 452-2), and
the antenna element (450, 450-1, 450-2) is provided between the first split unit (451, 451-1, 451-2) and the second split unit (452, 452-1, 452-2).

4. The electronic device (400, 400-1, 400-2, 400-3, 400-4) of any one of claims 1 to 3, wherein
the plurality of second side surface areas (423) comprises a second ground unit (462, 462-1, 462-2), and
the slot (460a, 460a-1, 460a-2) is provided between the first ground unit (461, 461-1, 461-2) and the second ground unit (462, 462-1, 462-2).

5. The electronic device (400, 400-1, 400-2, 400-3, 400-4) of any one of claims 1 to 4, wherein, in the folded state, the first ground unit (461, 461-1, 461-2) substantially faces the first split unit (451, 451-1, 451-2), and the second ground unit (462, 462-1, 462-2) substantially faces the second split unit (452, 452-1, 452-2).

6. The electronic device (400, 400-1, 400-2, 400-3, 400-4) of any one of claims 1 to 5, wherein the plurality of first side surface areas (413) comprises a first side surface (413a) on which the hinge unit (445) is disposed, a second side surface (413b) facing the first side surface (413a), and a plurality of third side surfaces (413c-1, 413c-2) connecting the first side surface (413a) to the second side surface (413b).

7. The electronic device (400-1) of any one of claims 1 to 6, wherein the first split unit (451-1) and the second split unit (452-1) are disposed on any one of the plurality of third side surfaces (413c-1, 413c-2).

8. The electronic device (400-2) of any one of claims 1 to 7, wherein
the first split unit (451-2) is disposed on the second side surface (413b), and
the second split unit (452-2) is disposed on any one of the plurality of third side surfaces (413c-1, 413c-2).

9. The electronic device (400, 400-3, 400-4) of any one of claims 1 to 8, wherein the first split unit (451) and the second split unit (452) are disposed on the second side surface (413b).

10. The electronic device (400, 400-1, 400-2, 400-3, 400-4) of any one of claims 1 to 9, wherein the plurality of second side surface areas (423) comprises a fourth side surface (423a) on which the hinge unit (445) is disposed, a fifth side surface (423b) facing the fourth side surface (423a), and a plurality of sixth side surfaces (423c-1, 423c-2) connecting the fourth side surface (423a) to the fifth side surface (423b).

11. The electronic device (400-3) of any one of claims 1 to 10, wherein the plurality of second side surface areas (423) further comprises a third split unit (453) and a fourth split unit (454) disposed on the plurality of sixth side surfaces (423c-1, 423c-2), respectively.

12. The electronic device (400-4) of any one of claims 1 to 11, wherein the plurality of second side surface areas (423) further comprises a third split unit (453-1) and a fourth split unit (454-1) disposed at both sides of the slot (460a) on the fifth side surface (423b), respectively, in the folded state.

13. The electronic device (400, 400-1, 400-2) of any one of claims 1 to 12, wherein the plurality of second side surface areas (423) is formed of a non-segmental structure.

14. The electronic device (400, 400-1, 400-2, 400-3, 400-4) of any one of claims 1 to 13, wherein the second housing portion (420) is thinner than the first housing portion (410).

15. The electronic device (400-3, 400-4) of any one of claims 1 to 14, further comprising:
a second power feeding unit (472) electrically connected to the slot (460a); and
a wireless communication circuit (444) disposed in the second housing portion (420) and configured to transmit and receive a communication signal to and from the slot (460a) through the second power feeding unit (472).
